# EUROPEAN PATENT APPLICATION

(11) **EP 4 518 124 A1**
(43) Date of publication of application: **05.03.2025**
(21) Application number: 23849162.5
(22) Date of filing: 06.07.2023
(51) Int. Cl.: H02M 3/00, H02M 3/335

(54) **DIRECT-CURRENT POWER CONVERTER AND DIRECT-CURRENT POWER CONVERSION SYSTEM**

(30) Priority: 30.07.2022 CN 202210911507
(71) Applicant: Huawei Digital Power Technologies Co., Ltd., Shenzhen, Guangdong 518043 (CN)
(72) Inventor: CHEN, Dong, Shenzhen, Guangdong 518043 (CN); SHI, Lei, Shenzhen, Guangdong 518043 (CN); CHEN, Fuwen, Shenzhen, Guangdong 518043 (CN)
(74) Representative: Gill Jennings & Every LLP
(86) International application number: PCT/CN2023/106069
(87) International publication number: WO 2024/027453

(57) **Abstract**

This application provides a direct current power converter and a direct current power conversion system. The direct current power converter includes a controller, a first power conversion module, and a second power conversion module. A first direct current terminal and a second direct current terminal of the first power conversion module are respectively coupled to a first direct current terminal and a second direct current terminal of the second power conversion module, and are respectively a first direct current terminal and a second direct current terminal of the direct current power converter. A third direct current terminal of the first power conversion module is a third direct current terminal of the direct current power converter, a fourth direct current terminal of the first power conversion module is coupled to a third direct current terminal of the second power conversion module, a fourth direct current terminal of the second power conversion module is a fourth direct current terminal of the direct current power converter, and the first power conversion module includes at least one first full-bridge circuit. The controller is configured to control, based on a first total voltage and/or a second total voltage, the first full-bridge circuit to work in a full-bridge mode or a half-bridge mode. According to this application, an input/output voltage application range can be widened.

## Description

This application claims priority to Chinese Patent Application No. 202210911507.7, filed with the China National Intellectual Property Administration on July 30, 2022 and entitled "DIRECT CURRENT POWER CONVERTER AND DIRECT CURRENT POWER CONVERSION SYSTEM", which is incorporated herein by reference in its entirety.

### TECHNICAL FIELD

This application relates to the field of electronic power, and in particular, to a direct current power converter and a direct current power conversion system.

### BACKGROUND

A direct current power converter is an electric energy converter for direct current voltage conversion, and is widely used in systems such as an uninterruptible power supply and battery management. An input/output voltage application range of the direct current power converter indicates a range of a ratio of an input voltage to an output voltage that can be implemented by the direct current power converter. A direct current power converter with a wider input/output voltage application range can be used in more power supply scenarios, and is more applicable.

In a conventional direct current power converter, when ranges of an input voltage and an output voltage are large, that is, to implement a wide range of a ratio of an input voltage to an output voltage, high design redundancy is required in circuit design and control policy design of the converter. This sacrifices some circuit performance, causing an excessively large circuit size, a high circuit weight, and more direct current power conversion losses. Therefore, how to resolve a problem of reducing circuit complexity and enhancing circuit working performance while widening an input/output voltage application range of a direct current power converter is one of technical problems that urgently need to be resolved currently.

### SUMMARY

Embodiments of this application provide a direct current power converter and a direct current power conversion system, so that an input/output voltage application range can be widened, direct current power conversion efficiency is high, a circuit structure is simple, and wide applicability is ensured.

According to a first aspect, this application provides a direct current power converter. The direct current power converter includes a controller, a first power conversion module, and a second power conversion module. A first direct current terminal and a second direct current terminal of the first power conversion module are respectively coupled to a first direct current terminal and a second direct current terminal of the second power conversion module, the first direct current terminal and the second direct current terminal of the first power conversion module are respectively a first direct current terminal and a second direct current terminal of the direct current power converter, a third direct current terminal of the first power conversion module and a fourth direct current terminal of the second power conversion module are respectively a third direct current terminal and a fourth direct current terminal of the direct current power converter, and the fourth direct current terminal of the first power conversion module is coupled to the third direct current terminal of the second power conversion module. Herein, the first power conversion module includes at least one first full-bridge circuit, and the controller may be configured to control, based on a first total voltage between the first direct current terminal and the second direct current terminal of the direct current power converter and/or a second total voltage between the third direct current terminal and the fourth direct current terminal of the direct current power converter, the first full-bridge circuit to work in a full-bridge mode or a half-bridge mode.

In this application, the direct current power converter may control, by using the controller and based on the first total voltage between the first direct current terminal and the second direct current terminal of the direct current power converter and/or the second total voltage between the third direct current terminal and the fourth direct current terminal of the direct current power converter, the first full-bridge circuit in the direct current power converter to work in different working modes (the full-bridge mode or the half-bridge mode), and different relationships between an alternating current terminal voltage and a direct current terminal voltage are specified for the first full-bridge circuit working in different working modes, so that a voltage conversion relationship of the direct current power converter may be adjusted by changing the working mode of the first full-bridge circuit, and voltages at two ends of the first full-bridge circuit are more flexibly controlled. This ensures that the direct current power converter has a wider input/output voltage application range, a simple circuit structure, and high direct current power conversion efficiency.

With reference to the first aspect, in a first possible implementation, the first power conversion module includes a first DC-AC conversion unit, a first AC-DC conversion unit, and a first transformer unit. A first direct current terminal and a second direct current terminal of the first DC-AC conversion unit are respectively the first direct current terminal and the second direct current terminal of the first power conversion module; a first alternating current terminal and a second alternating current terminal of the first DC-AC conversion unit are respectively coupled to a first alternating current terminal and a second alternating current terminal of the first AC-DC conversion unit by using the first transformer unit; and a first direct current terminal and a second direct current terminal of the first AC-DC conversion unit are respectively the third direct current terminal and the fourth direct current terminal of the first power conversion module. Herein, the first DC-AC conversion unit and/or the first AC-DC conversion unit may include the first full-bridge circuit, and the controller is configured to control, based on the first total voltage and/or the second total voltage, the first full-bridge circuit to work in the full-bridge mode or the half-bridge mode, to change a relationship between an alternating current terminal voltage and a direct current terminal voltage of the first full-bridge circuit in the first power conversion module. In this way, a difference between a second partial voltage between the first direct current terminal and the second direct current terminal of the first AC-DC conversion unit in the first power conversion module and the second total voltage is not greater than a specific threshold (for example, the second partial voltage may be kept not lower than 80% of the second total voltage), to avoid the second partial voltage greatly deviating from the second total voltage. This ensures that direct current voltage conversion efficiency of the direct current power converter is improved, a circuit of the direct current power converter is simple, and the direct current power converter is more applicable.

With reference to the first possible implementation of the first aspect, in a second possible implementation, the second power conversion module includes a second DC-AC conversion unit, a second AC-DC conversion unit, a second transformer unit, and a direct current regulation unit. A first direct current terminal and a second direct current terminal of the second DC-AC conversion unit are respectively the first direct current terminal and the second direct current terminal of the second power conversion module; a first alternating current terminal and a second alternating current terminal of the second DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. In other words, in this application, the controller may control the direct current regulation unit to change the direct current voltage between the third direct current terminal and the fourth direct current terminal of the direct current regulation unit, so as to adjust the direct current voltage output (which may be the direct current voltage between the first direct current terminal and the second direct current terminal, or the direct current voltage between the third direct current terminal and the fourth direct current terminal) of the direct current power converter. This ensures that direct current voltage conversion accuracy of the direct current power converter is improved and the direct current power converter is more applicable.

With reference to the first possible implementation of the first aspect, in a third possible implementation, the second power conversion module includes the first DC-AC conversion unit, a second AC-DC conversion unit, a second transformer unit, and a direct current regulation unit. The first direct current terminal and the second direct current terminal of the first DC-AC conversion unit are respectively the first direct current terminal and the second direct current terminal of the second power conversion module; the first alternating current terminal and the second alternating current terminal of the first DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. In other words, in this application, the controller may control the direct current regulation unit to change the direct current voltage between the third direct current terminal and the fourth direct current terminal of the direct current regulation unit, so as to adjust the direct current voltage output (which may be the direct current voltage between the first direct current terminal and the second direct current terminal, or the direct current voltage between the third direct current terminal and the fourth direct current terminal) of the direct current power converter. This ensures that direct current voltage conversion accuracy of the direct current power converter is improved and the direct current power converter is more applicable.

With reference to the first aspect, in a fourth possible implementation, the first power conversion module includes a first DC-AC conversion unit, a transformer unit, and a first AC-DC conversion unit; and the second power conversion module includes the first DC-AC conversion unit, the transformer unit, a second AC-DC conversion unit, and a direct current regulation unit. A first direct current terminal and a second direct current terminal of the first DC-AC conversion unit are respectively the first direct current terminal and the second direct current terminal of the first power conversion module, and are respectively the first direct current terminal and the second direct current terminal of the second power conversion module; a primary winding of the transformer unit is coupled to a first alternating current terminal and a second alternating current terminal of the first DC-AC conversion unit, a first secondary winding of the transformer unit is coupled to a first alternating current terminal and a second alternating current terminal of the first AC-DC conversion unit, and a second secondary winding of the transformer unit is coupled to a first alternating current terminal and a second alternating current terminal of the second AC-DC conversion unit; a first direct current terminal and a second direct current terminal of the first AC-DC conversion unit are respectively the third direct current terminal and the fourth direct current terminal of the first power conversion module; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. Herein, the DC-AC conversion unit and/or the first AC-DC conversion unit include/includes the first full-bridge circuit, and the controller is configured to control, based on the first total voltage and/or the second total voltage, the first full-bridge circuit to work in a full-bridge mode or a half-bridge mode. The controller changes a relationship between an alternating current terminal voltage and a direct current terminal voltage of the first full-bridge circuit in the first power conversion module. In this way, a difference between a second partial voltage between the first direct current terminal and the second direct current terminal of the first AC-DC conversion unit in the first power conversion module and the second total voltage is not greater than a specific threshold, to avoid the second partial voltage greatly deviating from the second total voltage. This ensures that direct current voltage conversion efficiency of the direct current power converter is improved, a circuit of the direct current power converter is simple, and the direct current power converter is more applicable.

With reference to either of the first possible implementation of the first aspect or the fourth possible implementation of the first aspect, in a fifth possible implementation, the first DC-AC conversion unit and/or the first AC-DC conversion unit include/includes the first full-bridge circuit, and the controller is configured to control, based on the first total voltage and/or the second total voltage, the first full-bridge circuit to work in the full-bridge mode or the half-bridge mode. A relationship between an alternating current terminal voltage and a direct current terminal voltage of the first full-bridge circuit in the first power conversion module is changed, so that a difference between a second partial voltage between the first direct current terminal and the second direct current terminal of the first AC-DC conversion unit in the first power conversion module and the second total voltage is not greater than a specific threshold (for example, the second partial voltage may be kept not lower than 80% of the second total voltage), to avoid the second partial voltage greatly deviating from the second total voltage. This ensures that direct current voltage conversion efficiency of the direct current power converter is improved, a circuit of the direct current power converter is simple, and the direct current power converter is more applicable.

With reference to the fifth possible implementation of the first aspect, in a sixth possible implementation, the first DC-AC conversion unit includes the first full-bridge circuit, and the controller is further configured to: when the first full-bridge circuit works in the full-bridge mode and a ratio of the second total voltage to the first total voltage is lower than a first threshold, or the second total voltage is lower than a second threshold, or the first total voltage is greater than a third threshold, control the first full-bridge circuit to work in the half-bridge mode. Further, the controller is further configured to: when the first full-bridge circuit works in the half-bridge mode and a ratio of the second total voltage to the first total voltage is greater than a fourth threshold, or the second total voltage is greater than a fifth threshold, or the first total voltage is lower than a sixth threshold, control the first full-bridge circuit to work in the full-bridge mode. The fourth threshold is greater than or equal to the first threshold, the fifth threshold is greater than or equal to the second threshold, and the sixth threshold is lower than or equal to the third threshold. The controller controls the working mode (from the full-bridge mode to the half-bridge mode, or from the half-bridge mode to the full-bridge mode) of the first full-bridge circuit in the first DC-AC conversion unit, to change a relationship between an alternating current terminal voltage and a direct current terminal voltage of the first DC-AC conversion unit, so as to boost or reduce a second partial voltage, and avoid the second partial voltage greatly deviating from the second total voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the sixth possible implementation of the first aspect, in a seventh possible implementation, the first threshold and the fourth threshold are obtained based on a maximum value of a voltage ratio of the first DC-AC conversion unit, a voltage ratio of the first AC-DC conversion unit, and a first turn ratio of the first transformer unit. The second threshold and the fifth threshold are obtained based on the maximum value of the voltage ratio of the first DC-AC conversion unit, the voltage ratio of the first AC-DC conversion unit, the first turn ratio, and a voltage range of the first total voltage. The third threshold and the sixth threshold are obtained based on the maximum value of the voltage ratio of the first DC-AC conversion unit, the voltage ratio of the first AC-DC conversion unit, the first turn ratio, and a voltage range of the second total voltage. The voltage ratio of the first DC-AC conversion unit is a ratio of a peak-to-peak alternating current terminal voltage to a direct current terminal voltage, and the voltage ratio of the first AC-DC conversion unit is a ratio of the direct current terminal voltage to the peak-to-peak alternating current terminal voltage. The controller controls the working mode of the first full-bridge circuit in the first DC-AC conversion unit to change a relationship between the peak-to-peak alternating current terminal voltage and the direct current terminal voltage of the first DC-AC conversion unit, so that the working mode of the first full-bridge circuit is controlled in a flexible and diversified manner, and the first full-bridge circuit is easy to operate and more applicable.

With reference to the fifth possible implementation of the first aspect, in an eighth possible implementation, the first AC-DC conversion unit includes the first full-bridge circuit, and the controller is further configured to: when the first full-bridge circuit works in the half-bridge mode and a ratio of the second total voltage to the first total voltage is lower than a first threshold, or the second total voltage is lower than a second threshold, or the first total voltage is greater than a third threshold, control the first full-bridge circuit to work in the full-bridge mode. The controller is further configured to: when the first full-bridge circuit works in the full-bridge mode and a ratio of the second total voltage to the first total voltage is greater than a fourth threshold, or the second total voltage is greater than a fifth threshold, or the first total voltage is lower than a sixth threshold, control the first full-bridge circuit to work in the half-bridge mode. The fourth threshold is greater than or equal to the first threshold, the fifth threshold is greater than or equal to the second threshold, and the sixth threshold is lower than or equal to the third threshold. The controller controls the working mode (from the full-bridge mode to the half-bridge mode, or from the half-bridge mode to the full-bridge mode) of the first full-bridge circuit in the first AC-DC conversion unit, to change a relationship between an alternating current terminal voltage and a direct current terminal voltage of the first AC-DC conversion unit, so as to boost or reduce a second partial voltage, avoid the second partial voltage greatly deviating from the second total voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the eighth possible implementation of the first aspect, in a ninth possible implementation, the first threshold and the fourth threshold are obtained based on a voltage ratio of the first DC-AC conversion unit, a maximum value of a voltage ratio of the first AC-DC conversion unit, and a first turn ratio of the first transformer unit. The second threshold and the fifth threshold are obtained based on the voltage ratio of the first DC-AC conversion unit, the maximum value of the voltage ratio of the first AC-DC conversion unit, the first turn ratio, and a range of the first total voltage. The third threshold and the sixth threshold are obtained based on the voltage ratio of the first DC-AC conversion unit, the maximum value of the voltage ratio of the first AC-DC conversion unit, the first turn ratio, and a range of the second total voltage. The voltage ratio of the first DC-AC conversion unit is a ratio of a peak-to-peak alternating current terminal voltage to a direct current terminal voltage, and the voltage ratio of the first AC-DC conversion unit is a ratio of the direct current terminal voltage to the peak-to-peak alternating current terminal voltage. The controller controls the working mode of the first full-bridge circuit in the first AC-DC conversion unit to change a relationship between the peak-to-peak alternating current terminal voltage and the direct current terminal voltage of the first AC-DC conversion unit, so that the working mode of the first full-bridge circuit is controlled in a flexible and diversified manner, and the first full-bridge circuit is easy to operate and more applicable.

With reference to the second possible implementation of the first aspect, in a tenth possible implementation, the second DC-AC conversion unit and/or the second AC-DC conversion unit include/includes a second full-bridge circuit, and the controller is configured to control, based on a first partial voltage between the third direct current terminal and the fourth direct current terminal of the direct current regulation unit and/or the first total voltage, the second full-bridge circuit to work in the full-bridge mode or the half-bridge mode. The controller controls the working mode (from the full-bridge mode to the half-bridge mode, or from the half-bridge mode to the full-bridge mode) of the second full-bridge circuit in the converter, to change a relationship between an alternating current terminal voltage and a direct current terminal voltage of the second DC-AC conversion unit or the second AC-DC conversion unit, so as to boost or reduce a third partial voltage between a first direct current terminal and a second direct current terminal of the second AC-DC conversion unit, and avoid the third partial voltage greatly deviating from the first partial voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the tenth possible implementation of the first aspect, in an eleventh possible implementation, the second DC-AC conversion unit includes the second full-bridge circuit, and the controller is further configured to: when the second full-bridge circuit works in the full-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the half-bridge mode. The controller is further configured to: when the second full-bridge circuit works in the half-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the full-bridge mode. The fourth threshold is greater than or equal to the first threshold, the fifth threshold is greater than or equal to the second threshold, and the sixth threshold is lower than or equal to the third threshold. The controller controls the working mode (from the full-bridge mode to the half-bridge mode, or from the half-bridge mode to the full-bridge mode) of the second full-bridge circuit in the second DC-AC conversion unit, to change a relationship between an alternating current terminal voltage and a direct current terminal voltage of the second DC-AC conversion unit, so as to boost or reduce a third partial voltage between a first direct current terminal and a second direct current terminal of the second AC-DC conversion unit, and avoid the third partial voltage greatly deviating from the first partial voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the eleventh possible implementation of the first aspect, in a twelfth possible implementation, the first threshold and the fourth threshold are obtained based on a minimum value of a voltage ratio of the second DC-AC conversion unit, a voltage ratio of the second AC-DC conversion unit, and a second turn ratio of the second transformer unit; the second threshold and the fifth threshold are obtained based on the minimum value of the voltage ratio of the second DC-AC conversion unit, the voltage ratio of the second AC-DC conversion unit, the second turn ratio, and a range of the first total voltage; and the third threshold and the sixth threshold are obtained based on the minimum value of the voltage ratio of the second DC-AC conversion unit, the voltage ratio of the second AC-DC conversion unit, the second turn ratio, and a range of the first partial voltage. The voltage ratio of the second DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage. The controller controls the working mode of the second full-bridge circuit in the second DC-AC conversion unit to change a relationship between the peak-to-peak alternating current terminal voltage and the direct current terminal voltage of the second DC-AC conversion unit, so that the working mode of the second full-bridge circuit is controlled in a flexible and diversified manner, and the second full-bridge circuit is easy to operate and more applicable.

With reference to the tenth possible implementation of the first aspect, in a thirteenth possible implementation, the second AC-DC conversion unit includes the second full-bridge circuit, and the controller is further configured to: when the second full-bridge circuit works in the half-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the full-bridge mode. The controller is further configured to: when the second full-bridge circuit works in the full-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the half-bridge mode. The fourth threshold is greater than or equal to the first threshold, the fifth threshold is greater than or equal to the second threshold, and the sixth threshold is lower than or equal to the third threshold. The controller controls the working mode (from the full-bridge mode to the half-bridge mode, or from the half-bridge mode to the full-bridge mode) of the second full-bridge circuit in the second AC-DC conversion unit, to change a relationship between an alternating current terminal voltage and a direct current terminal voltage of the second AC-DC conversion unit, so as to boost or reduce a third partial voltage between a first direct current terminal and a second direct current terminal of the second AC-DC conversion unit, and avoid the third partial voltage greatly deviating from the first partial voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the thirteenth possible implementation of the first aspect, in a fourteenth possible implementation, the first threshold and the fourth threshold are obtained based on a voltage ratio of the second DC-AC conversion unit, a minimum value of a voltage ratio of the second AC-DC conversion unit, and a second turn ratio of the second transformer unit; the second threshold and the fifth threshold are obtained based on the voltage ratio of the second DC-AC conversion unit, the minimum value of the voltage ratio of the second AC-DC conversion unit, the second turn ratio, and a range of the first total voltage; and the third threshold and the sixth threshold are obtained based on the voltage ratio of the second DC-AC, the minimum value of the voltage ratio of the second AC-DC conversion unit, the second turn ratio, and a range of the first partial voltage. The voltage ratio of the second DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage. The controller controls the working mode of the second full-bridge circuit in the second AC-DC conversion unit to change a relationship between the peak-to-peak alternating current terminal voltage and the direct current terminal voltage of the second AC-DC conversion unit, so that the working mode of the second full-bridge circuit is controlled in a flexible and diversified manner, and the second full-bridge circuit is easy to operate and more applicable.

With reference to the third possible implementation of the first aspect or the fourth possible implementation of the first aspect, in a fifteenth possible implementation, the second AC-DC conversion unit includes a second full-bridge circuit, and the controller is further configured to: when the second full-bridge circuit works in the half-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the full-bridge mode. The controller is further configured to: when the second full-bridge circuit works in the full-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the half-bridge mode. The fourth threshold is greater than or equal to the first threshold, the fifth threshold is greater than or equal to the second threshold, and the sixth threshold is lower than or equal to the third threshold. The controller controls the working mode (from the full-bridge mode to the half-bridge mode, or from the half-bridge mode to the full-bridge mode) of the second full-bridge circuit in the second AC-DC conversion unit, to change a relationship between an alternating current terminal voltage and a direct current terminal voltage of the second AC-DC conversion unit, so as to boost or reduce a third partial voltage between a first direct current terminal and a second direct current terminal of the second AC-DC conversion unit, and avoid the third partial voltage greatly deviating from the first partial voltage. This ensures that direct current voltage conversion efficiency of the direct current power converter is improved, the direct current power converter is more applicable, a wide input/output voltage application range with relatively low circuit complexity is implemented, and low costs and wide applicability is ensured.

With reference to the fifteenth possible implementation of the first aspect, in a sixteenth possible implementation, the first threshold and the fourth threshold are obtained based on a voltage ratio of the first DC-AC conversion unit, a minimum value of a voltage ratio of the second AC-DC conversion unit, and a turn ratio of the second transformer unit or a second turn ratio of the transformer unit; the second threshold and the fifth threshold are obtained based on the voltage ratio of the first DC-AC conversion unit, the minimum value of the voltage ratio of the second AC-DC conversion unit, the turn ratio of the second transformer unit or the second turn ratio, and a range of the first total voltage; and the third threshold and the sixth threshold are obtained based on the voltage ratio of the first DC-AC conversion unit, the minimum value of the voltage ratio of the second AC-DC conversion unit, the turn ratio of the second transformer unit or the second turn ratio, and a range of the first partial voltage. The voltage ratio of the first DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage. The controller controls the working mode of the second full-bridge circuit in the second AC-DC conversion unit to change a relationship between the peak-to-peak alternating current terminal voltage and the direct current terminal voltage of the second AC-DC conversion unit, so that the working mode of the second full-bridge circuit is controlled in a flexible and diversified manner, and the second full-bridge circuit is easy to operate and more applicable.

With reference to the second possible implementation of the first aspect, the third possible implementation of the first aspect, and the fourth possible implementation of the first aspect, in a seventeenth possible implementation, the controller is further configured to control, based on a first reference voltage, a second partial voltage between the third direct current terminal and the fourth direct current terminal of the first power conversion module, and a third partial voltage between the first direct current terminal and the second direct current terminal of the second AC-DC conversion unit, the direct current regulation unit to adjust a first partial voltage between the third direct current terminal and the fourth direct current terminal of the direct current regulation unit, so that a sum of the first partial voltage and the second partial voltage is the first reference voltage. It may be understood that the second total voltage between the third direct current terminal and the fourth direct current terminal of the direct current power converter is equal to the sum of the second partial voltage and the first partial voltage. In other words, the direct current power converter may control the first full-bridge circuit in the first power conversion module based on different first total voltages and/or second total voltages by using the controller, or control the second full-bridge circuit in the second power conversion module based on different first partial voltages and/or first total voltages by using the controller. In this way, a direct current voltage whose voltage value is the first reference voltage is output between the third direct current terminal and the fourth direct current terminal of the direct current power converter, so that a range of a ratio of an input direct current voltage to an output direct current voltage is wider, direct current voltage conversion efficiency is improved, and wide applicability is ensured.

With reference to the seventeenth possible implementation of the first aspect, in an eighteenth possible implementation, the controller is further configured to control, based on a second reference voltage and the second partial voltage, the direct current regulation unit to adjust the first partial voltage between the third direct current terminal and the fourth direct current terminal of the direct current regulation unit, so that the first total voltage is equal to the second reference voltage. It may be understood that a direct current voltage between the first direct current terminal and the second direct current terminal of the direct current power converter is the first total voltage. In other words, the direct current power converter may control the first full-bridge circuit in the first power conversion module based on different first total voltages and/or second total voltages by using the controller, or control the second full-bridge circuit in the second power conversion module based on different first partial voltages and/or first total voltages by using the controller. In this way, a direct current voltage whose voltage value is the second reference voltage is output between the first direct current terminal and the second direct current terminal of the direct current power converter, so that a range of a ratio of an input direct current voltage to an output direct current voltage is wider, direct current voltage conversion efficiency is improved, and wide applicability is ensured.

With reference to the second possible implementation of the first aspect, in a nineteenth possible implementation, the first DC-AC conversion unit includes two switching bridge arms connected in parallel, and connection terminals of switching transistors of the switching bridge arms are separately used as the first alternating current terminal and the second alternating current terminal of the first DC-AC conversion unit to connect to the first transformer unit. The second DC-AC conversion unit includes two switching bridge arms connected in parallel, and connection terminals of switching transistors of the switching bridge arms are separately used as the first alternating current terminal and the second alternating current terminal of the second DC-AC conversion unit to connect to the second transformer unit. The first AC-DC conversion unit includes two switching bridge arms connected in parallel, and connection terminals of switching transistors of the switching bridge arms are separately used as the first alternating current terminal and the second alternating current terminal of the first AC-DC conversion unit to connect to the first transformer unit. The second AC-DC conversion unit includes two switching bridge arms connected in parallel, and connection terminals of switching transistors of the switching bridge arms are separately used as the first alternating current terminal and the second alternating current terminal of the second AC-DC conversion unit to connect to the second transformer unit. The direct current power converter controls, by using the controller and based on different first total voltages and/or second total voltages, the first full-bridge circuit including switching transistors in the first DC-AC conversion unit or the second DC-AC conversion unit, or controls, by using the controller and based on different first partial voltages and/or first total voltages, the second full-bridge circuit including switching transistors in the first AC-DC conversion unit or the second AC-DC conversion unit. This ensures that voltages at two ends of the first full-bridge circuit and the second full-bridge circuit are more flexibly controlled, so that the direct current power converter has a wider input/output voltage application range, a simple circuit structure, and high direct current power conversion efficiency.

With reference to the third possible implementation of the first aspect, in a twentieth possible implementation, the first DC-AC conversion unit includes two switching bridge arms connected in parallel, and connection terminals of switching transistors of the switching bridge arms are respectively used as the first alternating current terminal and the second alternating current terminal of the first DC-AC conversion unit to connect to the first transformer unit and the second transformer unit. The first AC-DC conversion unit includes two switching bridge arms connected in parallel, and connection terminals of switching transistors of the switching bridge arms are separately used as the first alternating current terminal and the second alternating current terminal of the first AC-DC conversion unit to connect to the first transformer unit. The second AC-DC conversion unit includes a switching bridge arm and a capacitor bridge arm that are connected in parallel, and a connection terminal of a switching transistor of the switching bridge arm and a connection terminal of a capacitor of the capacitor bridge arm are respectively used as the first alternating current terminal and the second alternating current terminal of the second AC-DC conversion unit to connect to the second transformer unit. The direct current power converter controls, by using the controller and based on different first total voltages and/or second total voltages, the first full-bridge circuit including switching transistors in the first DC-AC conversion unit or the second DC-AC conversion unit, or controls, by using the controller and based on different first partial voltages and/or first total voltages, the second full-bridge circuit including switching transistors in the first AC-DC conversion unit or the second AC-DC conversion unit. This ensures that voltages at two ends of the first full-bridge circuit and the second full-bridge circuit are more flexibly controlled, so that the direct current power converter has a wider input/output voltage application range, a simple circuit structure, and high direct current power conversion efficiency.

According to a second aspect, this application provides a direct current power conversion system. The direct current power conversion system includes a direct current power supply and the direct current power converter according to any one of the first aspect and the possible implementations of the first aspect. The direct current power supply is configured to provide a direct current voltage input for the direct current power converter. The direct current power converter is configured to perform direct current power conversion based on a first direct current voltage provided by the direct current power supply, and output a second direct current voltage to a load. The direct current power supply includes at least one of a solar panel or an energy storage battery.

In this application, according to the direct current power converter provided in the first aspect, the direct current power converter in the direct current power conversion system can have a wider input/output voltage application range, a simple circuit structure, improved direct current power conversion efficiency of a photovoltaic system, simple operations, and wide applicability.

### BRIEF DESCRIPTION OF DRAWINGS

To describe the technical solutions in embodiments of this application more clearly, the following briefly describes the accompanying drawings for embodiments. It is clear that the accompanying drawings in the following description show merely some embodiments of this application, and a person of ordinary skill in the art may derive other drawings from these accompanying drawings without creative efforts.
FIG. 1 is a schematic diagram of an application scenario of a direct current power conversion system according to this application;
FIG. 2a is a schematic diagram of a structure of a direct current power conversion system according to this application;
FIG. 2b is a schematic diagram of another structure of a direct current power conversion system according to this application;
FIG. 3 is a schematic diagram of a structure of a direct current power converter according to this application;
FIG. 4 is a schematic diagram of another structure of a direct current power converter according to this application;
FIG. 5 is a schematic diagram of another structure of a direct current power converter according to this application;
FIG. 6 is a schematic diagram of another structure of a direct current power converter according to this application;
FIG. 7 is a schematic diagram of another structure of a direct current power converter according to this application;
FIG. 8 is a schematic diagram of another structure of a direct current power converter according to this application;
FIG. 9 is a schematic diagram of another structure of a direct current power converter according to this application;
FIG. 10 is a schematic diagram of a structure of a full-bridge buck circuit;
FIG. 11a is a schematic diagram of a structure of a neutral-point-clamped three-level full-bridge circuit;
FIG. 11b is a schematic diagram of a structure of an active neutral-point-clamped three-level full-bridge circuit; and
FIG. 11c is a schematic diagram of a structure of a flying-capacitor three-level full-bridge circuit.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

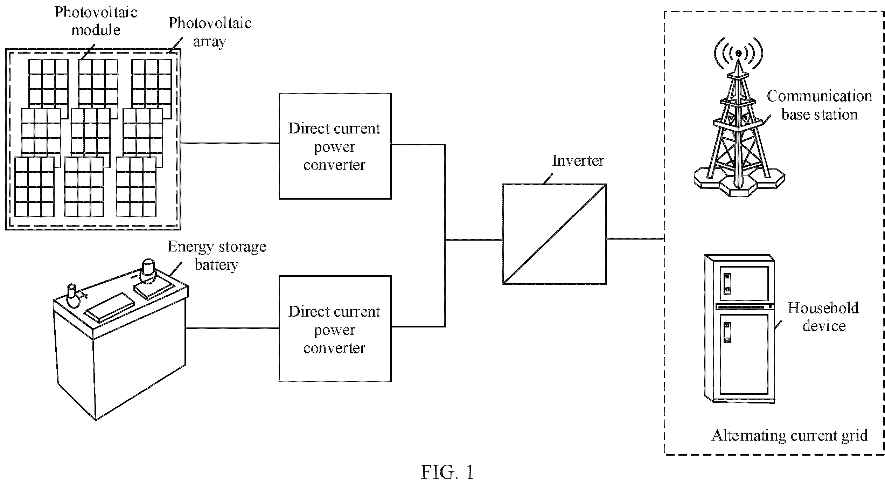

FIG. 1 is a schematic diagram of an application scenario of a direct current power conversion system according to this application. The direct current power conversion system provided in this application may include a direct current power supply and a direct current power converter. The direct current power supply may include a photovoltaic array, an output terminal of the photovoltaic array may be connected to a first terminal of the direct current power converter, and a second terminal of the direct current power converter is connected to a load. As shown in FIG. 1, the direct current power conversion system may include an inverter, and the load may be an alternating current power grid connected by using the inverter. In the direct current power conversion system shown in FIG. 1, the photovoltaic array may include one or more photovoltaic strings that are connected in parallel, and one photovoltaic string may be obtained by connecting one or more photovoltaic modules in series. The direct current power converter may change (which may be boost, buck, or the like) a direct current voltage provided by the photovoltaic array, and output a changed direct current voltage to the inverter. After performing voltage inversion and conversion, the inverter supplies power to an electric device such as a communication base station or a household device in the alternating current power grid.

In some feasible implementations, refer to FIG. 1 again. The direct current power supply may further include an energy storage battery, an output terminal of the energy storage battery may be connected to a first terminal of a direct current power converter, and a second terminal of the direct current power converter is connected to the alternating current power grid as a load by using the inverter. The direct current power converter may change (which may be boost, buck, or the like) a direct current voltage provided by the energy storage battery, and output a changed direct current voltage to the inverter. After performing voltage inversion and conversion, the inverter supplies power to an electric device such as a communication base station or a household device in the alternating current power grid.

In some feasible implementations, the inverter in FIG. 1 may provide a direct current voltage to the direct current power converter connected to the foregoing energy storage battery after performing voltage rectification and conversion on an alternating current voltage of the alternating current power grid. The direct current power converter may change the direct current voltage output by the inverter and output a changed direct current voltage to the energy storage battery, and the energy storage battery performs charging based on a voltage or a current output by the direct current power converter.

In some feasible implementations, the direct current voltage provided by the photovoltaic array in FIG. 1 is boosted or bucked by using the direct current power converter connected to the photovoltaic array, and is output to the direct current power converter connected to the energy storage battery. The direct current power converter connected to the energy storage battery performs boosting or bucking on the direct current voltage again, and then outputs the direct current voltage to the energy storage battery. The energy storage battery performs charging based on a voltage or a current output by the direct current power converter.

In the application scenario shown in FIG. 1, in a process in which the direct current power conversion system performs direct current voltage conversion by using the direct current power converter (where the direct current power converter may perform direct current power conversion based on a direct current voltage provided by the energy storage battery or a direct current voltage provided by the photovoltaic array, to supply power to the alternating current power grid connected to the inverter, or the direct current power converter may perform direct current power conversion based on a direct current voltage provided by the photovoltaic array, or a direct current voltage jointly provided by the alternating current power grid and the inverter, to supply power to the energy storage battery), a wider range of a ratio of an input voltage to an output voltage that can be implemented by the direct current power converter indicates wider application of the direct current power converter. In a conventional design of the direct current power converter, if a range of the input voltage is large and a range of an output voltage is large, a high design redundancy is required in circuit design and control policy design of the converter (for example, a direct current power converter formed by a multi-stage circuit implements a voltage change in a wide range by adding an extra circuit), so that a ratio of an input voltage to an output voltage in a wide range can be implemented. The circuit design is complex and the direct current power converter has a large size, and a direct current power conversion loss is high, and the direct current power converter is less applicable.

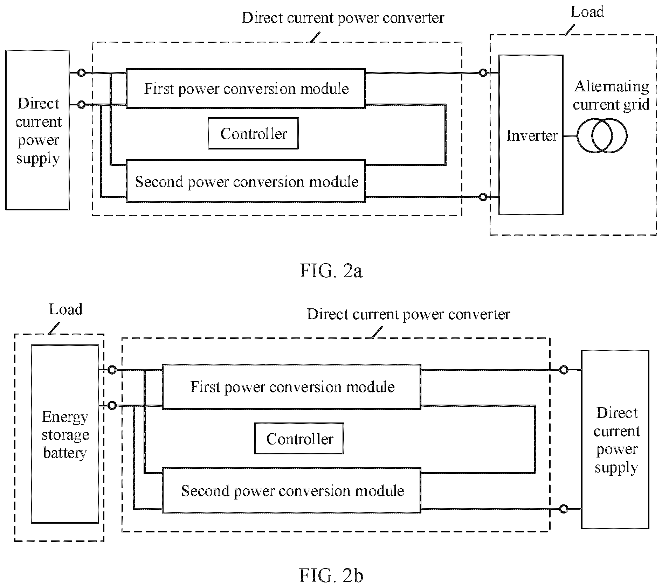

In the direct current power conversion system provided in this application, the direct current power converter includes a full-bridge circuit. The direct current power conversion system may control, by using the direct current power converter, a full-bridge circuit in the direct current power converter to work in different working modes (a full-bridge mode or a half-bridge mode) based on a direct current voltage at the first terminal and/or a direct current voltage at the second terminal, so that the direct current power converter may change a relationship between an alternating current terminal voltage and a direct current terminal voltage of the full-bridge circuit. This ensures a wider input/output voltage application range, a simple circuit structure, and high direct current power conversion efficiency. In addition, higher conversion efficiency allows the direct current power converter to use a higher switching frequency of a semiconductor device, to further reduce a size and a weight of a passive device (for example, a filter inductor or a filter capacitor) in the device, thereby reducing an overall size and a weight of the direct current power converter, and ensuring wide applicability. The following describes, with reference to FIG. 2a to FIG. 11c, an example of a direct current power conversion system and a direct current power converter provided in this application.

FIG. 2a is a schematic diagram of a structure of a direct current power conversion system according to this application. The direct current power conversion system shown in FIG. 2a includes a direct current power supply, a direct current power converter, and an inverter. A load may be an alternating current power grid connected by using the inverter. The direct current power supply may be a solar panel, an energy storage battery, or the like. A first direct current terminal and a second direct current terminal of the direct current power converter are connected to the direct current power supply, and a third direct current terminal and a fourth direct current terminal of the direct current power converter are connected to the alternating current power grid by using the inverter. In the direct current power conversion system shown in FIG. 2a, the direct current power supply is configured to provide a direct current voltage input for the direct current power converter. The direct current power converter boosts or reduces a direct current voltage between the first direct current terminal and the second direct current terminal, and outputs a changed direct current voltage to the inverter by using the third direct current terminal and the fourth direct current terminal, so as to supply power to the alternating current power grid.

FIG. 2b is a schematic diagram of another structure of a direct current power conversion system according to this application. The direct current power conversion system shown in FIG. 2b includes a direct current power supply and a direct current power converter. A load may include an energy storage battery. The direct current power supply may be a solar panel, and the like. A first direct current terminal and a second direct current terminal of the direct current power converter are connected to the energy storage battery, and a third direct current terminal and a fourth direct current terminal of the direct current power converter are connected to the direct current power supply. In the direct current power conversion system shown in FIG. 2b, the direct current power supply is configured to provide a direct current voltage input for the direct current power converter. The direct current power converter boosts or reduces a direct current voltage between the third direct current terminal and the fourth direct current terminal, and outputs a changed direct current voltage to the energy storage battery in the load by using the first direct current terminal and the second direct current terminal, so as to charge the energy storage battery.

In some feasible implementations, in the direct current power conversion system shown in FIG. 2a and/or FIG. 2b, the direct current power converter may include a controller and a full-bridge circuit (not shown in FIG. 2a and FIG. 2b). The direct current power converter may control, by using the controller and based on the direct current voltage between the first direct current terminal and the second direct current terminal and/or the direct current voltage between the third direct current terminal and the fourth direct current terminal of the direct current power converter, a full-bridge circuit in the direct current power converter to work in different working modes (a full-bridge mode or a half-bridge mode), so as to change a relationship between an alternating current terminal voltage and a direct current terminal voltage of the full-bridge circuit. This ensures that voltages at two ends of the full-bridge circuit are more flexibly controlled by the controller, so that the direct current power converter has a wider input/output voltage application range, a simple circuit structure, and high direct current power conversion efficiency.

The following describes, with reference to FIG. 2a and FIG. 2b to FIG. 11c, an example of a direct current power converter provided in an embodiment of this application. As shown in FIG. 2a and/or FIG. 2b (for ease of description, FIG. 2a is used as an example below for description, and details are not described herein again), in this embodiment of this application, the direct current power converter may include a first power conversion module, a second power conversion module, and a controller. A first direct current terminal and a second direct current terminal of the first power conversion module are respectively coupled to a first direct current terminal and a second direct current terminal of the second power conversion module; the first direct current terminal and the second direct current terminal of the first power conversion module are respectively a first direct current terminal and a second direct current terminal of the direct current power converter; a fourth direct current terminal of the first power conversion module is coupled to a third direct current terminal of the second power conversion module; a third direct current terminal of the first power conversion module is a third direct current terminal of the direct current power converter; and a fourth direct current terminal of the second power conversion module is a fourth direct current terminal of the direct current power converter. In this application, the first power conversion module includes at least one full-bridge circuit (which may be referred to as a first full-bridge circuit, not shown in FIG. 2a). The direct current power converter may control, by using the controller and based on a direct current voltage (namely, a first total voltage, which may be represented as Vp) between the first direct current terminal and the second direct current terminal of the direct current power converter and/or a direct current voltage (namely, a second total voltage, which may be represented as Vs) between the third direct current terminal and the fourth direct current terminal of the direct current power converter, the first full-bridge circuit in the first power conversion module to work in a full-bridge mode or a half-bridge mode, to change a relationship between an alternating current terminal voltage and a direct current terminal voltage of the first full-bridge circuit. In this way, a difference between the direct current voltage (namely, a second partial voltage, which may be represented as Vs2) between the third direct current terminal and the fourth direct current terminal of the first power conversion module and the second total voltage Vs is not greater than a specific threshold (for example, the second partial voltage may be kept not lower than 80% of the second total voltage), to avoid the second partial voltage Vs2 greatly deviating from the second total voltage Vs. The operation is simple, and direct current voltage conversion efficiency of the direct current power converter is improved.

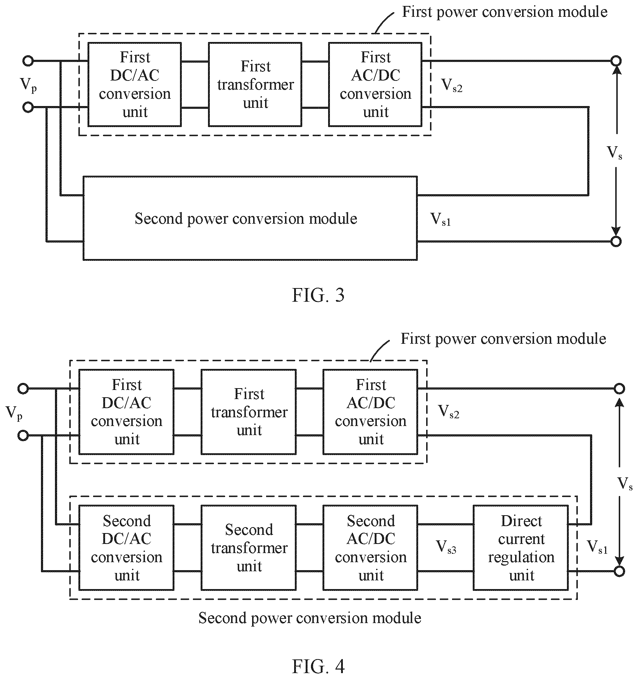

In some feasible implementations, FIG. 3 is a schematic diagram of a structure of a direct current power converter according to this application. As shown in FIG. 3, the first power conversion module includes a first DC-AC conversion unit, a first AC-DC conversion unit, and a first transformer unit. A first direct current terminal and a second direct current terminal of the first DC-AC conversion unit are respectively the first direct current terminal and the second direct current terminal of the first power conversion module; a first alternating current terminal and a second alternating current terminal of the first DC-AC conversion unit are respectively coupled to a first alternating current terminal and a second alternating current terminal of the first AC-DC conversion unit by using the first transformer unit; and a first direct current terminal and a second direct current terminal of the first AC-DC conversion unit are respectively the third direct current terminal and the fourth direct current terminal of the first power conversion module. The first DC-AC conversion unit and/or the first AC-DC conversion unit include/includes a first full-bridge circuit, and the controller (not shown in FIG. 3) is further configured to control, based on the first total voltage and/or the second total voltage, the first full-bridge circuit to work in a full-bridge mode or a half-bridge mode, to change a relationship between an alternating current terminal voltage and a direct current terminal voltage of the first full-bridge circuit in the first power conversion module. In this way, a difference between a direct current voltage (namely, a second partial voltage Vs2) between the first direct current terminal and the second direct current terminal of the first AC-DC conversion unit in the first power conversion module and the second total voltage Vs is not greater than a specific threshold, to avoid the second partial voltage Vs2 greatly deviating from the second total voltage Vs. This ensures that direct current voltage conversion efficiency of the direct current power converter is improved, a circuit of the direct current power converter is simple, and the direct current power converter is more applicable.

In some feasible implementations, FIG. 4 is a schematic diagram of another structure of a direct current power converter according to this application. As shown in FIG. 4, for a structure of the first power conversion module in FIG. 4, refer to the first power conversion module in FIG. 3. Details are not described herein again. The second power conversion module in FIG. 4 includes a second DC-AC conversion unit, a second AC-DC conversion unit, a second transformer unit, and a direct current regulation unit. A first direct current terminal and a second direct current terminal of the second DC-AC conversion unit are respectively the first direct current terminal and the second direct current terminal of the second power conversion module; a first alternating current terminal and a second alternating current terminal of the second DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. The second DC-AC conversion unit and/or the second AC-DC conversion unit include/includes a second full-bridge circuit. The controller (not shown in FIG. 4) controls, based on the first total voltage Vp and/or a first partial voltage Vs1 between the third direct current terminal and the fourth direct current terminal of the direct current regulation unit, the second full-bridge circuit to work in a full-bridge mode or a half-bridge mode, to change a relationship between an alternating current terminal voltage and a direct current terminal voltage of the second full-bridge circuit in the second power conversion module. In this way, a difference between a third partial voltage Vs3 between the first direct current terminal and the second direct current terminal of the second AC-DC conversion unit in the second power conversion module and the first partial voltage Vs1 is not greater than a specific threshold. This ensures that direct current voltage conversion efficiency of the direct current power converter is improved, a circuit of the direct current power converter is simple, and the direct current power converter is more applicable.

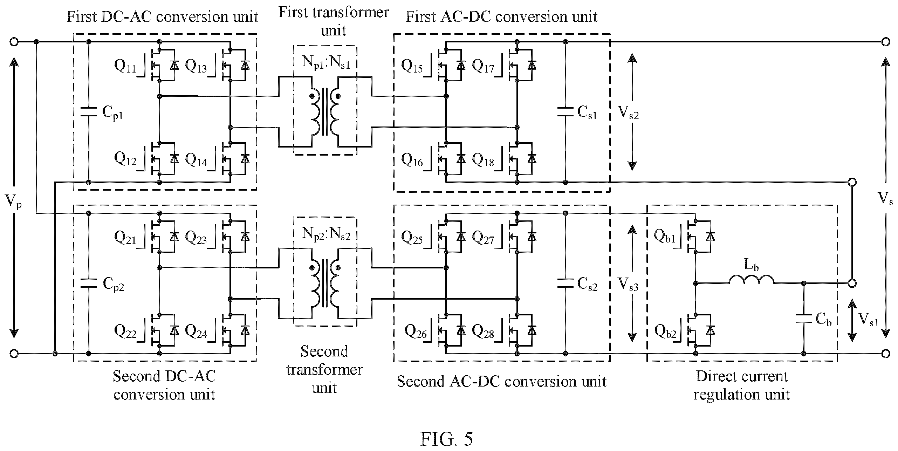

In some feasible implementations, the first DC-AC conversion unit and the first AC-DC conversion unit in the first power conversion module in FIG. 4 include a first full-bridge circuit, and the second DC-AC conversion unit and the second AC-DC conversion unit in the second power conversion module include a second full-bridge circuit. FIG. 5 is a schematic diagram of another structure of a direct current power converter according to this application. As shown in FIG. 5, the first full-bridge circuit included in the first DC-AC conversion unit includes switching transistors Q11, Q12, Q13, and Q14 (where each switching transistor may be a metal-oxide-semiconductor field-effect transistor (Metal-Oxide-Semiconductor Field-Effect Transistor, MOSFET)), and a capacitor Cp1. A second connection terminal of Q11 is connected to a first connection terminal of Q12, a second connection terminal of Q13 is connected to a first connection terminal of Q14, a first connection terminal of Q11 is connected to a first connection terminal of Cp1 and a first connection terminal of Q13, and a second connection terminal of Q12 is connected to a second connection terminal of Cp1 and a second connection terminal of Q14. The second connection terminals of Q11, Q12, Q13, and Q14 may be source electrodes of Q11, Q12, Q13, and Q14, and the first connection terminals of Q11, Q12, Q13, and Q14 may be drain electrodes of Q11, Q12, Q13, and Q14. A first full-bridge circuit included in the first AC-DC conversion unit includes switching transistors Q15, Q16, Q17, and Q18, and a capacitor Cs1. A second full-bridge circuit included in the second DC-AC conversion unit includes switching transistors Q21, Q22, Q23, and Q24 (where each switching transistor may be a metal-oxide-semiconductor field-effect transistor), and a capacitor Cp2. A second full-bridge circuit included in the second AC-DC conversion unit includes switching transistors Q25, Q26, Q27, and Q28, and a capacitor Cs2. Each switching transistor in the first full-bridge circuit included in the first AC-DC conversion unit, the second full-bridge circuit included in the second DC-AC conversion unit, and the second full-bridge circuit included in the second AC-DC conversion unit may be a metal-oxide-semiconductor field-effect transistor, and a connection relationship between a switching transistor and a capacitor of each full-bridge circuit may be the same as that of the first full-bridge circuit included in the first DC-AC conversion unit. Details are not described herein again. The first connection terminal of Cp1 and the second connection terminal of Cp1 of the first full-bridge circuit in the first DC-AC conversion unit are respectively connected to a first connection terminal of Cp2 and a second connection terminal of Cp2 of the second full-bridge circuit in the second DC-AC conversion unit. A connection terminal of the first connection terminal of Cp1 and the first connection terminal of Cp2 is the first direct current terminal of the direct current power converter, and a connection terminal of the second connection terminal of Cp1 and the second connection terminal of Cp2 is the second direct current terminal of the direct current power converter. Further, the first transformer unit and the second transformer unit in FIG. 5 include a transformer. Refer to FIG. 5. The first transformer unit in FIG. 5 includes a first transformer, and a turn ratio of a first winding to a second winding of the first transformer is Np1:Ns1 (or Np1/Ns1). A first terminal and a second terminal of the first winding of the first transformer are respectively connected to a connection terminal of the switching transistors Q11 and Q12 and a connection terminal of the switching transistors Q13 and Q14 in the first full-bridge circuit included in the first DC-AC conversion unit, and a first terminal and a second terminal of the second winding are respectively connected to a connection terminal of the switching transistors Q15 and Q16 and a connection terminal of the switching transistors Q17 and Q18 in the first full-bridge circuit included in the first AC-DC conversion unit. The second transformer unit includes a second transformer, and a turn ratio of a first winding to a second winding of the second transformer is Np2:Ns2 (or Np2/Ns2). A first terminal and a second terminal of the first winding of the second transformer are respectively connected to a connection terminal of the switching transistors Q21 and Q22 and a connection terminal of the switching transistors Q23 and Q24 in the second full-bridge circuit included in the second DC-AC conversion unit, and a first terminal and a second terminal of the second winding are respectively connected to a connection terminal of the switching transistors Q27 and Q28 and a connection terminal of the switching transistors Q25 and Q26 in the second full-bridge circuit included in the second AC-DC conversion unit. Further, the direct current regulation unit in FIG. 5 may include a buck circuit. Refer to FIG. 5. The direct current regulation unit in FIG. 5 includes the buck circuit, and the buck circuit includes a switching transistor Qb1, a switching transistor Qb2 (where each switching transistor may be a metal-oxide-semiconductor field-effect transistor), an inductor Lb, and a capacitor Cb. A second connection terminal of Qb1 is connected to a first connection terminal of Qb2, a connection terminal of Qb1 and Qb2 is connected to a first connection terminal of the capacitor Cb by using the inductor Lb, and a second connection terminal of Qb2 is connected to a second connection terminal of the capacitor Cb. A first connection terminal of Qb1 and the second connection terminal of Qb2 in the buck circuit are respectively connected to a first connection terminal of the capacitor Cs2 and a second connection terminal of the capacitor Cs2 in the second AC-DC conversion unit, and a connection terminal of Lb and Cb is connected to a second connection terminal of the capacitor Cs1 in the first AC-DC conversion unit. A connection terminal of the capacitor Cs1 and the switching transistors Q15 and Q17 in the first AC-DC conversion unit is the third direct current terminal of the direct current power converter, and a connection terminal of the second connection terminal of Qb2 and the second connection terminal of the capacitor Cb is the fourth direct current terminal of the direct current power converter.

In some feasible implementations, in the direct current power converter shown in FIG. 5, the first DC-AC conversion unit includes a first full-bridge circuit, and the first full-bridge circuit may work in a full-bridge mode or a half-bridge mode. The working mode of the first AC-DC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The first full-bridge circuit in the first DC-AC conversion unit works in the full-bridge mode, and a ratio of the second total voltage to the first total voltage is lower than a first threshold. The controller (not shown in FIG. 5) controls the first full-bridge circuit to work in the half-bridge mode. Specifically, when the first full-bridge circuit in the first DC-AC conversion unit works in the full-bridge mode, the switching transistors Q11 and Q12 of a first bridge arm are switched on/off and complement with each other based on a predetermined frequency and a duty cycle of 50%, and the switching transistors Q13 and Q14 of a second bridge arm are also switched on/off and complement with each other based on a predetermined frequency and a duty cycle of 50%. In addition, Q11 is synchronized with Q14, and Q12 is synchronized with Q13. When the first full-bridge circuit in the first AC-DC conversion unit works in the full-bridge mode, the switching transistors Q15 and Q16 of a first bridge arm are controlled to be switched on/off and complement with each other based on a predetermined frequency and a duty cycle of 50%, and the switching transistors Q17 and Q18 of a second bridge arm are also switched on/off and complement with each other based on a predetermined frequency and a duty cycle of 50%. In addition, Q15 is synchronized with Q18, and Q16 is synchronized with Q17. The first threshold is obtained based on a maximum value of a voltage ratio of the first DC-AC conversion unit, a voltage ratio of the first AC-DC conversion unit, and a first turn ratio of the first transformer unit. Specifically, when the first full-bridge circuit in the first DC-AC conversion unit works in the full-bridge mode, a maximum value of an alternating current terminal voltage of the first DC-AC conversion unit is a positive direct current terminal voltage, and a minimum value of the alternating current terminal voltage of the first DC-AC conversion unit is a negative direct current terminal voltage. In this case, a ratio (namely, the voltage ratio of the first DC-AC conversion unit, which may be represented as a) of a peak-to-peak alternating current terminal voltage to a direct current terminal voltage of the first DC-AC conversion unit is 2. Similarly, when the first full-bridge circuit works in the half-bridge mode, if the maximum value of the alternating current terminal voltage of the first DC-AC conversion unit is a positive direct current terminal voltage, and the minimum value of the alternating current terminal voltage is 0 (or the maximum value of the alternating current terminal voltage is 0, and the maximum value of the alternating current terminal voltage is a negative direct current terminal voltage), the voltage ratio a of the first DC-AC conversion unit is 1. In conclusion, the maximum value max(a) of the voltage ratio a of the first DC-AC conversion unit is 2. When the first AC-DC conversion unit works in the full-bridge mode, a maximum value of an alternating current terminal voltage of the first AC-DC conversion unit is a positive direct current terminal voltage, and a minimum value of the alternating current terminal voltage is a negative direct current terminal voltage. In this case, a ratio (namely, the voltage ratio of the first AC-DC, which may be represented as b) of the direct current terminal voltage to a peak-to-peak alternating current terminal voltage of the first AC-DC conversion unit is 0.5. The first threshold may be max(a)*(Ns1/Np1)*b=Ns1/Np1. It may be understood that the first threshold may be a value corresponding to max(a)*(Ns1/Np1)*b, or may be any value in a value range determined according to max(a)*(Ns1/Np1)*b (for example, any one of 0.9*max(a)*(Ns1/Np1)*b to 1.1*max(a)*(Ns1/Np1)*b may be used as the first threshold). In this embodiment of this application, an example in which the value corresponding to max(a)*(Ns1/Np1)*b is the first threshold is used for description. Details are not described below again. When the ratio of the second total voltage to the first total voltage is lower than the first threshold, that is, Vs/Vp<Ns1/Np1, the controller controls the first full-bridge circuit in the first DC-AC conversion unit to work in the half-bridge mode. To be specific, the controller controls the switching transistors Q11 and Q12 of the first bridge arm of the full-bridge circuit to switch on/off and complement with each other based on a predetermined frequency and a duty cycle of 50%, and the switching transistor Q13 of the second bridge arm remains normally disconnected and the switching transistor Q14 remains normally connected. Alternatively, the controller controls the switching transistors Q11 and Q12 of the first bridge arm of the full-bridge circuit of the first DC-AC conversion unit to switch on/off and complement with each other based on a predetermined frequency and a duty cycle of 50%, and the switching transistor Q14 of the second bridge arm remains normally disconnected and the switching transistor Q13 remains normally connected.

Optionally, when the first AC-DC conversion unit works in the full-bridge mode, the first full-bridge circuit in the first DC-AC conversion unit works in the full-bridge mode, and the second total voltage Vs is lower than a second threshold, the controller may control the first full-bridge circuit to work in the half-bridge mode. Specifically, the second threshold is obtained based on a maximum value of a voltage ratio of the first DC-AC conversion unit, a voltage ratio of the first AC-DC conversion unit, a first turn ratio, and a range of the first total voltage. The second threshold may be max(a)*(Ns1/Np1)*b*max(Vp)=(Ns1/Np1)*max(Vp) (where max(a)=2, b=0.5, and max(Vp) is a maximum value of the first total voltage). It may be understood that the second threshold may be a value corresponding to max(a)*(Ns1/Np1)*b*max(Vp), or may be any value in a value range determined according to max(a)*(Ns1/Np1)*b*max(Vp). In this embodiment of this application, an example in which the value corresponding to max(a)*(Ns1/Np1)*b*max(Vp) is the second threshold is used for description. Details are not described below again. When the second total voltage is lower than the second threshold, that is, Vs<(Ns1/Np1)*max(Vp), the controller may control the first full-bridge circuit to work in the half-bridge mode.

Optionally, when the first AC-DC conversion unit works in the full-bridge mode, the first full-bridge circuit in the first DC-AC conversion unit works in the full-bridge mode, and the first total voltage Vp is greater than a third threshold, the controller may control the first full-bridge circuit to work in the half-bridge mode. Specifically, the third threshold is obtained based on a maximum value of a voltage ratio of the first DC-AC conversion unit, a voltage ratio of the first AC-DC conversion unit, a first turn ratio, and a range of the second total voltage. The third threshold may be min(Vs)/max(a)/(Ns1/Np1)/b=min(Vs)/(Ns1/Np1) (where max(a)=2, b=0.5, and min(Vs) is a minimum value of the second total voltage). It may be understood that the third threshold may be a value corresponding to min(Vs)/max(a)/(Ns1/Np1)/b, or may be any value in a value range determined according to min(Vs)/max(a)/(Ns1/Np1)/b. In this embodiment of this application, an example in which the value corresponding to min(Vs)/max(a)/(Ns1/Np1)/b is the third threshold is used for description. Details are not described below again. When the first total voltage is greater than the third threshold, that is, Vp>min(Vs)/(Ns1/Np1), the controller controls the first full-bridge circuit to work in the half-bridge mode.

It may be understood that, for example, when Vs/Vp is lower than the first threshold Ns1/Np1, the controller controls the first full-bridge circuit in the first DC-AC conversion unit to work in the half-bridge mode. In the first power conversion module, when the first AC-DC conversion unit works in the full-bridge mode and the first full-bridge circuit works in the full-bridge mode (where a=2 and b=0.5), according to the second partial voltage Vs2=a*(Ns1/Np1)*b*Vp, the second partial voltage Vs2=Vp*(Ns1/Np1). A ratio of the second partial voltage Vs2 to the first total voltage Vp is equal to the first turn ratio, that is, Ns1/Np1=Vs2/Vp, and a control condition that Vs/Vp is lower than the first threshold Ns1/Np1 may be represented as Vs<Vs2. In other words, when VsNp<Ns1/Np1, the controller controls the first full-bridge circuit to work in the half-bridge mode. This is equivalent to that when Vs<Vs2, the controller controls the first full-bridge circuit to work in the half-bridge mode. It may be understood that, when Vs<Vs2, the controller controls the first full-bridge circuit to work in the half-bridge mode, so that the second partial voltage is reduced to 0.5*Vp*(Ns1/Np1). In other words, when the second partial voltage Vs2 is greater than a voltage threshold (for example, when Vs2>Vs), the controller controls the working mode of the first full-bridge circuit in the first DC-AC conversion unit to change a relationship between a peak-to-peak alternating current terminal voltage and a direct current terminal voltage in a conversion unit (for example, the first DC-AC conversion unit) in which the first full-bridge circuit is located, so as to reduce the second partial voltage Vs2, and avoid the second partial voltage Vs2 being greater than the second total voltage Vs (a case in which the controller controls the first full-bridge circuit based on the second threshold and the third threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the first DC-AC conversion unit includes a first full-bridge circuit, and the first full-bridge circuit may work in a full-bridge mode or a half-bridge mode. The working mode of the first AC-DC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The first full-bridge circuit in the first DC-AC conversion unit works in the half-bridge mode, and a ratio of the second total voltage to the first total voltage is greater than a fourth threshold. The controller controls the first full-bridge circuit in the DC-AC conversion unit to work in the full-bridge mode. The fourth threshold is obtained based on a maximum value of a voltage ratio of the first DC-AC conversion unit, a voltage ratio of the first AC-DC conversion unit, and a first turn ratio of the first transformer unit. Herein, when the first AC-DC conversion unit works in the full-bridge mode, b=0.5, and the fourth threshold is max(a)*(Ns1/Np1)*b=Ns1/Np1 (where max(a)=2). It may be understood that the fourth threshold may be a value corresponding to max(a)*(Ns1/Np1)*b, or may be any value in a value range determined according to max(a)*(Ns1/Np1)*b. In addition, the fourth threshold is greater than or equal to the first threshold, and in this embodiment of this application, an example in which the value corresponding to max(a)*(Ns1/Np1)*b is the fourth threshold, that is, the fourth threshold is equal to the first threshold is used for description. Details are not described below again. When the ratio of the second total voltage to the first total voltage is greater than the first threshold, that is, Vs/Vp>Ns1/Np1, the controller controls the first full-bridge circuit to work in the full-bridge mode.

Optionally, when the first AC-DC conversion unit works in the full-bridge mode, the first full-bridge circuit in the first DC-AC conversion unit works in the half-bridge mode, and the second total voltage Vs is greater than a fifth threshold, the controller controls the first full-bridge circuit to work in the full-bridge mode. Herein, the fifth threshold may be max(a)*(Ns1/Np1)*b*max(Vp)=(Ns1/Np1)*max(Vp) (where max(a)=2, b=0.5, and max(Vp) is a maximum value of the first total voltage). It may be understood that the fifth threshold may be a value corresponding to max(a)*(Ns1/Np1)*b*max(Vp), or may be any value in a value range determined according to max(a)*(Ns1/Np1)*b*max(Vp). In addition, the fifth threshold is greater than or equal to the second threshold. In this embodiment of this application, an example in which the value corresponding to max(a)*(Ns1/Np1)*b*max(Vp) is the fifth threshold, that is, the fifth threshold is equal to the second threshold is used for description. Details are not described below. When the second total voltage is greater than the fifth threshold, that is, Vs>(Ns1/Np1)*max(Vp), the controller controls the first full-bridge circuit to work in the full-bridge mode.

Optionally, when the first AC-DC conversion unit works in the full-bridge mode, the first full-bridge circuit in the first DC-AC conversion unit works in the half-bridge mode, and the first total voltage Vp is lower than a sixth threshold, the controller controls the first full-bridge circuit to work in the full-bridge mode. Herein, the sixth threshold is min(Vs)/max(a)/(Ns1/Np1)/b=min(Vs)/(Ns1/Np1) (where max(a)=2, b=0.5, and min(Vs) is a minimum value of the second total voltage). It may be understood that the sixth threshold may be a value corresponding to min(Vs)/max(a)/(Ns1/Np1)/b, or may be any value in a value range determined according to min(Vs)/max(a)/(Ns1/Np1)/b. In addition, the sixth threshold is lower than or equal to the third threshold. In this embodiment of this application, an example in which the value corresponding to min(Vs)/max(a)/(Ns1/Np1)/b is the sixth threshold, that is, the sixth threshold is equal to the third threshold is used for description. Details are not described below. When the first total voltage is lower than the sixth threshold, that is, Vp<min(Vs)/(Ns1/Np1), the controller controls the first full-bridge circuit to work in the full-bridge mode.

It may be understood that, for example, when Vs/Vp is greater than the fourth threshold Ns1/Np1, the controller controls the first full-bridge circuit in the first DC-AC conversion unit to work in the full-bridge mode. When the first AC-DC conversion unit works in the full-bridge mode and the first full-bridge circuit works in the half-bridge mode (where a=1 and b=0.5), according to the second partial voltage Vs2=a*(Ns1/Np1)*b*Vp, the second partial voltage Vs2=0.5*Vp*(Ns1/Np1). A relationship between the ratio of the second partial voltage Vs2 to the first total voltage Vp and the first turn ratio is Ns1/Np1=2*Vs2/Vp, and a control condition that Vs/Vp is greater than the fourth threshold Ns1/Np1 may be represented as Vs>2*Vs2. In other words, when Vs/Vp is greater than the fourth threshold Ns1/Np1, the controller controls the first full-bridge circuit to work in the full-bridge mode. This is equivalent to that when Vs>2*Vs2, the controller controls the first full-bridge circuit to work in the full-bridge mode. It may be understood that, when Vs/Vp>Ns1/Np1, the controller controls the first full-bridge circuit to work in the full-bridge mode, so that the second partial voltage is boosted to Vp*(Ns1/Np1). In other words, when the second partial voltage Vs2 is lower than a voltage threshold (for example, when Vs2<0.5*Vs), the controller controls the working mode of the first full-bridge circuit in the first DC-AC conversion unit to change a relationship between a peak-to-peak alternating current terminal voltage and a direct current terminal voltage in a conversion unit (for example, the first DC-AC conversion unit) in which the first full-bridge circuit is located, so as to boost the second partial voltage Vs2, and avoid the second partial voltage Vs2 greatly deviating from the second total voltage Vs (a case in which the controller controls the first full-bridge circuit based on the fifth threshold and the sixth threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the first AC-DC conversion unit includes a first full-bridge circuit, and the first full-bridge circuit may work in a full-bridge mode or a half-bridge mode. The working mode of the first DC-AC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The first full-bridge circuit in the first AC-DC conversion unit works in the half-bridge mode, and a ratio of the second total voltage to the first total voltage is lower than a first threshold. The controller controls the first full-bridge circuit to work in the full-bridge mode. Specifically, when the first full-bridge circuit in the first AC-DC conversion unit works in the half-bridge mode, the switching transistors Q15 and Q16 of the first bridge arm are switched on/off and complement with each other based on a predetermined frequency and a duty cycle of 50%, and the switching transistor Q17 of the second bridge arm remains normally disconnected and the switching transistor Q18 remains normally connected. Alternatively, the switching transistors Q15 and Q16 of the first bridge arm of the full-bridge circuit of the first AC-DC conversion unit are controlled to be switched on/off and complement with each other based on a predetermined frequency and a duty cycle of 50%, and the switching transistor Q18 of the second bridge arm remains normally disconnected and the switching transistor Q17 remains normally connected. The first threshold is obtained based on a voltage ratio of the first DC-AC conversion unit, a maximum value of a voltage ratio of the first AC-DC conversion unit, and a first turn ratio of the first transformer unit. Specifically, when the first full-bridge circuit in the first AC-DC conversion unit works in the full-bridge mode, a maximum value of an alternating current terminal voltage of the first AC-DC conversion unit is a positive direct current terminal voltage, and a minimum value of the alternating current terminal voltage is a negative direct current terminal voltage. In this case, a ratio (namely, the voltage ratio of the first AC-DC conversion unit, which may be represented as b) of the direct current terminal voltage to a peak-to-peak alternating current terminal voltage of the first AC-DC conversion unit is 0.5. Similarly, when the first full-bridge circuit works in the half-bridge mode, if the maximum value of the alternating current terminal voltage of the first AC-DC conversion unit is a positive direct current terminal voltage, and the minimum value of the alternating current terminal voltage is 0 (or the maximum value of the alternating current terminal voltage is 0, and the maximum value of the alternating current terminal voltage is a negative direct current terminal voltage), the voltage ratio b of the first DC-AC conversion unit is 1. In conclusion, the maximum value max(b) of the voltage ratio b of the first DC-AC conversion unit is 1. When the first DC-AC conversion unit works in the full-bridge mode, a maximum value of an alternating current terminal voltage of the first DC-AC conversion unit is a positive direct current terminal voltage, and a minimum value of the alternating current terminal voltage of the first DC-AC conversion unit is a negative direct current terminal voltage. In this case, a ratio a of a peak-to-peak alternating current terminal voltage to the direct current terminal voltage of the first DC-AC conversion unit is 2. The first threshold may be a*(Ns1/Np1)*max(b)=2*Ns1/Np1. It may be understood that the first threshold may be a value corresponding to a*(Ns1/Np1)*max(b), or may be any value in a value range determined according to a*(Ns1/Np1)*max(b) (for example, any one of 0.9*a*(Ns1/Np1)*max(b) to 1.1*a*(Ns1/Np1)*max(b) may be used as the first threshold). In this embodiment of this application, an example in which the value corresponding to a*(Ns1/Np1)*max(b) is the first threshold is used for description. Details are not described below again. When the ratio of the second total voltage to the first total voltage is lower than the first threshold, that is, Vs/Vp<2*Ns1/Np1, the controller controls the first full-bridge circuit to work in the full-bridge mode. That is, the switching transistors Q15 and Q16 of the first bridge arm of the full-bridge circuit are controlled to be switched on/off and complement with each other based on a predetermined frequency and a duty cycle of 50%, and the switching transistors Q17 and Q18 of the second bridge arm are also controlled to switch on/off and complement with each other based on a predetermined frequency and a duty cycle of 50%. In addition, Q15 is synchronized with Q18, and Q16 is synchronized with Q17.

Optionally, when the first DC-AC conversion unit works in the full-bridge mode, the first full-bridge circuit in the first AC-DC conversion unit works in the half-bridge mode, and the second total voltage Vs is lower than a second threshold, the controller may control the first full-bridge circuit to work in the full-bridge mode. Specifically, the second threshold is obtained based on a voltage ratio of the first DC-AC conversion unit, a maximum value of a voltage ratio of the first AC-DC conversion unit, a first turn ratio of the first transformer unit, and a range of the first total voltage. The second threshold may be a*(Ns1/Np1)*max(b)*max(Vp)=2*(Ns1/Np1)*max(Vp) (where max(b)=1, a=2, and max(Vp) is the maximum value of the first total voltage). It may be understood that the second threshold may be a value corresponding to a*(Ns1/Np1)*max(b)*max(Vp), or may be any value in a value range determined according to a*(Ns1/Np1)*max(b)*max(Vp). In this embodiment of this application, an example in which the value corresponding to a*(Ns1/Np1)*max(b)*max(Vp) is the second threshold is used for description. Details are not described below again. When the second total voltage is lower than the second threshold, that is, Vs<2*(Ns1/Np1)*max(Vp), the controller controls the first full-bridge circuit to work in the full-bridge mode.

Optionally, when the first DC-AC conversion unit works in the full-bridge mode, the first full-bridge circuit in the first AC-DC conversion unit works in the half-bridge mode, and the first total voltage Vp is greater than a third threshold, the controller may control the first full-bridge circuit to work in the full-bridge mode. Specifically, the third threshold is obtained based on a voltage ratio of the first DC-AC conversion unit, a maximum value of a voltage ratio of the first AC-DC conversion unit, a first turn ratio of the first transformer unit, and a range of the second total voltage. The third threshold may be min(Vs)/a/(Ns1/Np1)/max(b)=0.5*min(Vs)/(Ns1/Np1) (where max(b)=1, a=2, and min(Vs) is a minimum value of the second total voltage). It may be understood that the third threshold may be a value corresponding to min(Vs)/a/(Ns1/Np1)/max(b), or may be any value in a value range determined according to min(Vs)/a/(Ns1/Np1)/max(b). In this embodiment of this application, an example in which the value corresponding to min(Vs)/a/(Ns1/Np1)/max(b) is the third threshold is used for description. Details are not described below again. When the first total voltage is greater than the third threshold, that is, Vp>0.5*min(Vs)/(Ns1/Np1), the controller controls the first full-bridge circuit to work in the full-bridge mode.

It may be understood that, for example, when Vs/Vp is lower than the first threshold 2*Ns1/Np1, the controller controls the first full-bridge circuit in the first AC-DC conversion unit to work in the full-bridge mode. In the first power conversion module, when the first DC-AC conversion unit works in the full-bridge mode and the first full-bridge circuit works in the half-bridge mode (where a=2 and b=1), according to the second partial voltage Vs2=a*(Ns1/Np1)*b*Vp, the second partial voltage Vs2=2*Vp*(Ns1/Np1). A ratio of the second partial voltage Vs2 to the first total voltage Vp is 2*Ns1/Np1=Vs2/Vp, and a control condition that Vs/Vp is lower than the first threshold 2*Ns1/Np1 may be expressed as Vs<Vs2. In other words, when Vs/Vp is lower than the first threshold 2*Ns1/Np1, the controller controls the first full-bridge circuit to work in the full-bridge mode. This is equivalent to that when Vs<Vs2, the controller controls the first full-bridge circuit to work in the full-bridge mode. It may be understood that, when Vs/Vp<Ns1/Np1, the controller controls the first full-bridge circuit to work in the full-bridge mode, so that the second partial voltage is reduced to Vp*(Ns1/Np1). In other words, when the second partial voltage Vs2 is greater than a voltage threshold (for example, when Vs2>Vs), the controller controls the working mode of the first full-bridge circuit to change a relationship between a peak-to-peak alternating current terminal voltage and a direct current terminal voltage in a conversion unit (for example, the first AC-DC conversion unit) in which the first full-bridge circuit is located, so as to reduce the second partial voltage Vs2, and avoid the second partial voltage Vs2 being greater than the second total voltage Vs (a case in which the controller controls the first full-bridge circuit based on the second threshold and the third threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the first AC-DC conversion unit includes a first full-bridge circuit, and the first full-bridge circuit may work in a full-bridge mode or a half-bridge mode. The working mode of the first DC-AC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The first full-bridge circuit in the first AC-DC conversion unit works in the full-bridge mode, and a ratio of the second total voltage to the first total voltage is greater than a fourth threshold. The controller controls the first full-bridge circuit to work in the half-bridge mode. The fourth threshold is obtained based on a voltage ratio of the first DC-AC conversion unit, a maximum value of a voltage ratio of the first AC-DC conversion unit, and a first turn ratio of the first transformer unit. Herein, when the first DC-AC conversion unit works in the full-bridge mode, a=2, and the fourth threshold is a*(Ns1/Np1)*max(b)=2*Ns1/Np1 (where max(b)=1). It may be understood that the fourth threshold may be a value corresponding to a*(Ns1/Np1)*max(b), or may be any value in a value range determined according to a*(Ns1/Np1)*max(b). In addition, the fourth threshold is greater than or equal to the first threshold. In this embodiment of this application, an example in which the value corresponding to a*(Ns1/Np1)*max(b) is the fourth threshold, that is, the fourth threshold is equal to the first threshold is used for description. Details are not described below again. When the ratio of the second total voltage to the first total voltage is greater than the fourth threshold, that is, Vs/Vp>2*Ns1/Np1, the controller controls the first full-bridge circuit to work in the half-bridge mode.

Optionally, when the first DC-AC conversion unit works in the full-bridge mode, the first full-bridge circuit in the first AC-DC conversion unit works in the full-bridge mode, and the second total voltage Vs is greater than a fifth threshold, the controller controls the first full-bridge circuit to work in the half-bridge mode. Herein, the fifth threshold is a*(Ns1/Np1)*max(b)*max(Vp)=2*(Ns1/Np1)*max(Vp) (where max(b)=1, a=2, and max(Vp) is a maximum value of the first total voltage). It may be understood that the fifth threshold may be a value corresponding to a*(Ns1/Np1)*max(b)*max(Vp), or may be any value in a value range determined according to a*(Ns1/Np1)*max(b)*max(Vp). In addition, the fifth threshold is greater than or equal to the second threshold. In this embodiment of this application, an example in which the value corresponding to a*(Ns1/Np1)*max(b)*max(Vp) is the fifth threshold, that is, the fifth threshold is equal to the second threshold is used for description. Details are not described below again. When the second total voltage is greater than the fifth threshold, that is, Vs>2*(Ns1/Np1)*max(Vp), the controller controls the first full-bridge circuit to work in the half-bridge mode.

Optionally, when the first DC-AC conversion unit works in the full-bridge mode, the first full-bridge circuit in the first AC-DC conversion unit works in the full-bridge mode, and the first total voltage Vp is lower than a sixth threshold, the controller controls the first full-bridge circuit to work in the half-bridge mode. Herein, the sixth threshold is min(Vs)/a/(Ns1/Np1)/max(b)=0.5*min(Vs)/(Ns1/Np1) (where max(b)=1, a=2, and min(Vs) is a minimum value of the second total voltage). It may be understood that the sixth threshold may be a value corresponding to min(Vs)/a/(Ns1/Np1)/max(b), or may be any value in a value range determined according to min(Vs)/a/(Ns1/Np1)/max(b). In addition, the sixth threshold is lower than or equal to the third threshold. In this embodiment of this application, an example in which the value corresponding to min(Vs)/a/(Ns1/Np1)/max(b) is the sixth threshold, that is, the sixth threshold is equal to the third threshold is used for description. Details are not described below again. When the first total voltage is lower than the sixth threshold, that is, Vp<0.5*min(Vs)/(Ns1/Np1), the controller controls the first full-bridge circuit to work in the half-bridge mode.

It may be understood that, for example, when Vs/Vp is greater than the fourth threshold 2*Ns1/Np1, the controller controls the first full-bridge circuit in the first AC-DC conversion unit to work in the half-bridge mode. In the first power conversion module, when the first DC-AC conversion unit works in the full-bridge mode and the first full-bridge circuit works in the full-bridge mode (where a=2 and b=0.5), according to Vs2=a*(Ns1/Np1)*b*Vp, the second partial voltage Vs2=Vp*(Ns1/Np1). Therefore, a ratio of the second partial voltage Vs2 to the first total voltage Vp is Ns1/Np1=Vs2/Vp, and a control condition that Vs/Vp is greater than the fourth threshold 2*Ns1/Np1 may be represented as Vs>2*Vs2. In other words, when Vs/Vp is greater than the fourth threshold 2*Ns1/Np1, the controller controls the first full-bridge circuit to work in the half-bridge mode. This is equivalent to that when Vs>2*Vs2, the controller controls the first full-bridge circuit to work in the half-bridge mode. It may be understood that, when Vs/Vp is greater than the fourth threshold 2*Ns1/Np1, the controller controls the first full-bridge circuit to work in the half-bridge mode (where a=2 and b=1). In other words, when Vs>2*Vs2, the controller controls the first full-bridge circuit to work in the half-bridge mode, so that the second partial voltage is boosted to 2*Vp*(Ns1/Np1). In other words, when the second partial voltage Vs2 is lower than a voltage threshold (for example, when Vs2<0.5*Vs), the controller controls the working mode of the first full-bridge circuit to change a relationship between a peak-to-peak alternating current terminal voltage and a direct current terminal voltage in a conversion unit (for example, the first AC-DC conversion unit) in which the first full-bridge circuit is located, so as to boost the second partial voltage Vs2, and avoid the second partial voltage Vs2 greatly deviating from the second total voltage Vs (a case in which the controller controls the first full-bridge circuit based on the fifth threshold and the sixth threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the second DC-AC conversion unit includes a second full-bridge circuit, and the second full-bridge circuit may work in a full-bridge mode or a half-bridge mode. The working mode of the second AC-DC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The second full-bridge circuit in the second DC-AC conversion unit works in the full-bridge mode, and a ratio of the first partial voltage to the first total voltage is lower than a first threshold. The controller controls the second full-bridge circuit to work in the half-bridge mode. Specifically, when the second full-bridge circuit in the second DC-AC conversion unit works in the full-bridge mode, the switching transistors Q21 and Q22 of a first bridge arm are switched on/off and complement with each other based on a predetermined frequency and a duty cycle of 50%, and the switching transistors Q23 and Q24 of a second bridge arm are also switched on/off and complement with each other based on a predetermined frequency and a duty cycle of 50%. In addition, Q21 is synchronized with Q24, and Q22 is synchronized with Q23. When the second full-bridge circuit in the second AC-DC conversion unit works in the full-bridge mode, the switching transistors Q25 and Q26 of a first bridge arm are switched on/off and complement with each other based on a predetermined frequency and a duty cycle of 50%, and the switching transistors Q27 and Q28 of a second bridge arm are also switched on/off and complement with each other based on a predetermined frequency and a duty cycle of 50%. In addition, Q25 is synchronized with Q28, and Q26 is synchronized with Q27. The first threshold is obtained based on a minimum value of a voltage ratio of the second DC-AC conversion unit, a voltage ratio of the second AC-DC conversion unit, and a second turn ratio of the second transformer unit. Specifically, when the second full-bridge circuit in the second DC-AC conversion unit works in the full-bridge mode, a maximum value of an alternating current terminal voltage of the second DC-AC conversion unit is a positive direct current terminal voltage, and a minimum value of the alternating current terminal voltage is a negative direct current terminal voltage. In this case, a ratio (namely, the voltage ratio of the second DC-AC conversion unit, which may be represented as c) of a peak-to-peak alternating current terminal voltage to a direct current terminal voltage of the second DC-AC conversion unit is 2. Similarly, when the second full-bridge circuit works in the half-bridge mode, if the maximum value of the alternating current terminal voltage of the second DC-AC conversion unit is a positive direct current terminal voltage, and the minimum value of the alternating current terminal voltage is 0 (or the maximum value of the alternating current terminal voltage is 0, and the maximum value of the alternating current terminal voltage is a negative direct current terminal voltage), the voltage ratio c of the second DC-AC conversion unit is 1. In conclusion, the minimum value min(c) of the voltage ratio c of the second DC-AC conversion unit is 1. When the second AC-DC conversion unit works in the full-bridge mode, a maximum value of an alternating current terminal voltage of the second AC-DC conversion unit is a positive direct current terminal voltage, and a minimum value of the alternating current terminal voltage is a negative direct current terminal voltage. In this case, a ratio (namely, the voltage ratio of the second AC-DC, which may be represented as d) of the direct current terminal voltage to a peak-to-peak alternating current terminal voltage of the second AC-DC conversion unit is 0.5. The first threshold may be min(c)*(Ns2/Np2)*d=0.5*Ns2/Np2. It may be understood that the first threshold may be a value corresponding to min(c)*(Ns2/Np2)*d, or may be any value in a value range determined according to min(c)*(Ns2/Np2)*d (for example, any one of 0.9*min(c)*(Ns2/Np2)*d to 1.1*min(c)*(Ns2/Np2)*d may be used as the first threshold). In this embodiment of this application, an example in which the value corresponding to min(c)*(Ns2/Np2)*d is the first threshold is used for description. Details are not described herein again. When the ratio of the first partial voltage to the first total voltage is lower than the first threshold, that is, Vs1/Vp<0.5*Ns2/Np2, the controller controls the second full-bridge circuit to work in the half-bridge mode. To be specific, the controller controls the switching transistors Q21 and Q22 of the first bridge arm of the full-bridge circuit to switch on/off and complement with each other based on a predetermined frequency and a duty cycle of 50%, and the switching transistor Q23 of the second bridge arm remains normally disconnected and the switching transistor Q24 remains normally connected. Alternatively, the controller controls the switching transistors Q21 and Q22 of the first bridge arm of the full-bridge circuit of the first DC-AC conversion unit to switch on/off and complement with each other based on a predetermined frequency and a duty cycle of 50%, and the switching transistor Q24 of the second bridge arm remains normally disconnected and the switching transistor Q23 remains normally connected.

Optionally, when the second AC-DC conversion unit works in the full-bridge mode, the second full-bridge circuit in the second DC-AC conversion unit works in the full-bridge mode, and the first partial voltage Vs1 is lower than a second threshold, the controller controls the second full-bridge circuit to work in the half-bridge mode. Specifically, the second threshold is obtained based on a minimum value of a voltage ratio of the second DC-AC conversion unit, a voltage ratio of the second AC-DC conversion unit, a second turn ratio, and a range of the first partial voltage. The second threshold may be min(c)*(Ns2/Np2)*d*min(Vp)=0.5*(Ns2/Np2)*min(Vp) (where min(c)=1, d=0.5, and min(Vp) is a minimum value of the first total voltage). It may be understood that the second threshold may be a value corresponding to min(c)*(Ns2/Np2)*d*min(Vp), or may be any value in a value range determined according to min(c)*(Ns2/Np2)*d*min(Vp). In this embodiment of this application, an example in which the value corresponding to min(c)*(Ns2/Np2)*d*min(Vp) is the second threshold is used for description. Details are not described below again. When the first partial voltage is lower than the second threshold, that is, Vs1<0.5*(Ns2/Np2)*min(Vp), the controller controls the second full-bridge circuit to work in the half-bridge mode.

Optionally, when the second AC-DC conversion unit works in the full-bridge mode, the second full-bridge circuit in the second DC-AC conversion unit works in the full-bridge mode, and the first total voltage Vp is greater than a third threshold, the controller controls the second full-bridge circuit to work in the half-bridge mode. Specifically, the third threshold is obtained based on a minimum value of a voltage ratio of the second DC-AC conversion unit, a voltage ratio of the second AC-DC conversion unit, a second turn ratio, and a range of the second total voltage. The third threshold may be max(Vs1)/min(c)/(Ns2/Np2)/d=2*max(Vs1)/(Ns2/Np2) (where min(c)=1, d=0.5, and max(Vs1) is a maximum value of the first partial voltage). It may be understood that the third threshold may be a value corresponding to max(Vs1)/min(c)/(Ns2/Np2)/d, or may be any value in a value range determined according to max(Vs1)/min(c)/(Ns2/Np2)/d. In this embodiment of this application, an example in which the value corresponding to max(Vs1)/min(c)/(Ns2/Np2)/d is the third threshold is used for description. Details are not described below again. When the first total voltage is greater than the third threshold, that is, Vp>2*max(Vs1)/(Ns2/Np2), the controller controls the second full-bridge circuit to work in the half-bridge mode.

It may be understood that, for example, when Vs1/Vp is lower than the first threshold 0.5*Ns2/Np2, the controller controls the second full-bridge circuit to work in the half-bridge mode. In the second power conversion module, when the second AC-DC conversion unit works in the full-bridge mode and the second full-bridge circuit works in the full-bridge mode (where c=2 and d=0.5), according to Vs3=c*(Ns2/Np2)*d*Vp, the third partial voltage Vs3=Vp*(Ns2/Np2). Therefore, a ratio of the third partial voltage Vs3 to the first total voltage Vp is equal to the first turn ratio, that is, Vs3/Vp=Ns2/Np2, and a control condition that Vs1/Vp is lower than the first threshold 0.5*Ns2/Np2 may be represented as Vs3>2*Vs1. In other words, when Vs1/Vp is lower than the first threshold 0.5*Ns2/Np2, the controller controls the second full-bridge circuit to work in the half-bridge mode. This is equivalent to that when Vs3>2*Vs1, the controller controls the second full-bridge circuit to work in the half-bridge mode. It may be understood that, when Vs3>2*Vs1, the controller controls the second full-bridge circuit to work in the half-bridge mode, so that the third partial voltage is reduced to 0.5*Vp*(Ns2/Np2). In other words, when the third partial voltage Vs3 is greater than a voltage threshold (for example, when Vs3>2*Vs1), the controller controls the working mode of the second full-bridge circuit to change a relationship between a peak-to-peak alternating current terminal voltage and a direct current terminal voltage in a conversion unit (for example, the second DC-AC conversion unit) in which the second full-bridge circuit is located, so as to reduce the third partial voltage Vs3, and avoid the third partial voltage Vs3 greatly deviating from the first partial voltage Vs1 (a case in which the controller controls the second full-bridge circuit based on the second threshold and the third threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the second DC-AC conversion unit includes a second full-bridge circuit, and the second full-bridge circuit may work in a full-bridge mode or a half-bridge mode. The working mode of the second AC-DC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The second full-bridge circuit in the second DC-AC conversion unit works in the half-bridge mode, and a ratio of the first partial voltage to the first total voltage is greater than a fourth threshold. The controller controls the second full-bridge circuit to work in the full-bridge mode. The fourth threshold is obtained based on a minimum value of a voltage ratio of the second DC-AC conversion unit, a voltage ratio of the second AC-DC conversion unit, and a second turn ratio of the second transformer unit. Herein, when the second AC-DC conversion unit works in the full-bridge mode, d=0.5, and the fourth threshold may be min(c)*(Ns2/Np2)*d=0.5*Ns2/Np2 (where min(c)=1). It may be understood that the fourth threshold may be a value corresponding to min(c)*(Ns2/Np2)*d, or may be any value in a value range determined according to min(c)*(Ns2/Np2)*d. In addition, the fourth threshold is greater than or equal to the first threshold. In this embodiment of this application, an example in which the value corresponding to min(c)*(Ns2/Np2)*d is the fourth threshold, that is, the fourth threshold is equal to the first threshold is used for description. Details are not described below again. When the ratio of the first partial voltage to the first total voltage is greater than the first threshold, that is, Vs1/Vp>0.5*Ns2/Np2, the controller controls the second full-bridge circuit to work in the full-bridge mode.

Optionally, when the second AC-DC conversion unit works in the full-bridge mode, the second full-bridge circuit in the second DC-AC conversion unit works in the half-bridge mode, and the first partial voltage Vs1 is greater than a fifth threshold, the controller controls the second full-bridge circuit to work in the full-bridge mode. Herein, the fifth threshold may be min(c)*(Ns2/Np2)*d*min(Vp)=0.5*(Ns2/Np2)*min(Vp) (where min(c)=1, d=0.5, and min(Vp) is a minimum value of the first total voltage). It may be understood that the fifth threshold may be a value corresponding to min(c)*(Ns2/Np2)*d*min(Vp), or may be any value in a value range determined according to min(c)*(Ns2/Np2)*d*min(Vp). In addition, the fifth threshold is greater than or equal to the second threshold. In this embodiment of this application, an example in which the value corresponding to min(c)*(Ns2/Np2)*d*min(Vp) is the fifth threshold, that is, the fifth threshold is equal to the second threshold is used for description. Details are not described below again. When the first partial voltage is greater than the fifth threshold, that is, Vs1>0.5*Ns2/Np2*min(Vp), the controller controls the second full-bridge circuit to work in the full-bridge mode.

Optionally, when the second AC-DC conversion unit works in the full-bridge mode, the second full-bridge circuit in the second DC-AC conversion unit works in the half-bridge mode, and the first total voltage Vp is lower than a sixth threshold, the controller controls the second full-bridge circuit to work in the full-bridge mode. Herein, the sixth threshold is max(Vs1)/min(c)/(Ns2/Np2)/d=2*max(Vs1)/(Ns2/Np2) (where min(c)=1, d=0.5, and max(Vs1) is a maximum value of the first partial voltage). It may be understood that the sixth threshold may be a value corresponding to max(Vs1)/min(c)/(Ns2/Np2)/d, or may be any value in a value range determined according to max(Vs1)/min(c)/(Ns2/Np2)/d. In addition, the sixth threshold is lower than or equal to the third threshold. In this embodiment of this application, an example in which the value corresponding to max(Vs1)/min(c)/(Ns2/Np2)/d is the sixth threshold, that is, the sixth threshold is equal to the third threshold is used for description. Details are not described below again. When the first total voltage is lower than the sixth threshold, that is, Vp<2*max(Vs1)/(Ns2/Np2), the controller controls the first full-bridge circuit to work in the full-bridge mode.

It may be understood that, for example, when Vs1/Vp is greater than the fourth threshold 0.5*Ns2/Np2, the controller controls the second full-bridge circuit to work in the full-bridge mode. In the second power conversion module, when the second AC-DC conversion unit works in the full-bridge mode and the second full-bridge circuit works in the half-bridge mode (where c=1 and d=0.5), according to Vs3=c*(Ns2/Np2)*d*Vp, the third partial voltage is Vs3=0.5*Vp*(Ns2/Np2). Therefore, a ratio of the third partial voltage Vs3 to the first total voltage Vp is Vs3/Vp=0.5*Ns2/Np2, and a control condition that Vs1/Vp is greater than the fourth threshold 0.5*Ns2/Np2 may be represented as Vs3<Vs1. In other words, when Vs1/Vp is greater than the fourth threshold 0.5*Ns2/Np2, the controller controls the second full-bridge circuit to work in the full-bridge mode. This is equivalent to that when Vs3<Vs1, the controller controls the second full-bridge circuit to work in the full-bridge mode. It may be understood that, when Vs1/Vp is greater than the fourth threshold 0.5*Ns2/Np2, the controller controls the second full-bridge circuit to work in the full-bridge mode (where c=2 and d=0.5). To be specific, when Vs3<Vs1, the controller controls the second full-bridge circuit to work in the full-bridge mode, so that the third partial voltage is boosted to Vp*(Ns2/Np2). In other words, when the third partial voltage Vs3 is lower than a voltage threshold (for example, when Vs3<Vs1), the controller controls the working mode of the second full-bridge circuit to change a relationship between a peak-to-peak alternating current terminal voltage and a direct current terminal voltage in a conversion unit (for example, the second DC-AC conversion unit) in which the second full-bridge circuit is located, so as to boost the third partial voltage Vs3, and avoid the third partial voltage Vs3 not being greater than the first partial voltage Vs1 (a case in which the controller controls the second full-bridge circuit based on the fifth threshold and the sixth threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the second AC-DC conversion unit includes a second full-bridge circuit, and the second full-bridge circuit may work in a full-bridge mode or a half-bridge mode. The working mode of the second DC-AC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The second full-bridge circuit in the second AC-DC conversion unit works in the half-bridge mode, and a ratio of the first partial voltage to the first total voltage is lower than a first threshold. The controller controls the second full-bridge circuit to work in the full-bridge mode. Specifically, when the second full-bridge circuit in the second AC-DC conversion unit works in the half-bridge mode, the switching transistors Q25 and Q26 of a second bridge arm are switched on/off and complement with each other based on a predetermined frequency and a duty cycle of 50%, and the switching transistor Q27 of the second bridge arm remains normally disconnected and the switching transistor Q28 remains normally connected. Alternatively, the switching transistors Q25 and Q26 of the first bridge arm of the full-bridge circuit of the second DC-AC conversion unit are controlled to be switched on/off and complement with each other based on a predetermined frequency and a duty cycle of 50%, and the switching transistor Q28 of the second bridge arm remains normally disconnected and the switching transistor Q27 remains normally connected. The first threshold is obtained based on a voltage ratio of the second DC-AC conversion unit, a minimum value of a voltage ratio of the second AC-DC conversion unit, and a second turn ratio of the second transformer unit. Specifically, when the second full-bridge circuit in the second AC-DC conversion unit works in the full-bridge mode, a maximum value of an alternating current terminal voltage of the second AC-DC conversion unit is a positive direct current terminal voltage, and a minimum value of the alternating current terminal voltage is a negative direct current terminal voltage. In this case, a ratio of the direct current terminal voltage to a peak-to-peak alternating current terminal voltage of the second AC-DC conversion unit (namely, the voltage ratio of the second AC-DC conversion unit, which may be represented as d) is 0.5. Similarly, when the second full-bridge circuit works in the half-bridge mode, if the maximum value of the alternating current terminal voltage of the second AC-DC conversion unit is a positive direct current terminal voltage, and the minimum value of the alternating current terminal voltage is 0 (or the maximum value of the alternating current terminal voltage is 0, and the maximum value of the alternating current terminal voltage is a negative direct current terminal voltage), the voltage ratio d of the second AC-DC conversion unit is 1. In conclusion, the minimum value min(d) of the voltage ratio d of the second AC-DC conversion unit is 0.5. When the second DC-AC conversion unit works in the full-bridge mode, a maximum value of an alternating current terminal voltage of the second DC-AC conversion unit is a positive direct current terminal voltage, and a minimum value of the alternating current terminal voltage of the second DC-AC conversion unit is a negative direct current terminal voltage. In this case, a ratio (namely, the voltage ratio of the second DC-AC, which may be represented as c) of a peak-to-peak alternating current terminal voltage to the direct current terminal voltage of the second DC-AC conversion unit is 2. The first threshold may be c*(Ns2/Np2)*min(d)=Ns2/Np2. It may be understood that the first threshold may be a value corresponding to c*(Ns2/Np2)*min(d), or may be any value in a value range determined according to c*(Ns2/Np2)*min(d) (for example, any one of 0.9*c*(Ns2/Np2)*min(d) to 1.1*c*(Ns2/Np2)*min(d) may be used as the first threshold). In this embodiment of this application, an example in which the value corresponding to c*(Ns2/Np2)*min(d) is the first threshold is used for description. Details are not described herein again. When the ratio of the first partial voltage to the first total voltage is lower than the first threshold, that is, Vs1/Vp<Ns2/Np2, the controller controls the second full-bridge circuit to work in the full-bridge mode. To be specific, the controller controls the switching transistors Q25 and Q26 of the first bridge arm of the full-bridge circuit to switch on/off and complement with each other based on a predetermined frequency and a duty cycle of 50%, and controls the switching transistors Q27 and Q28 of the second bridge arm to switch on/off and complement with each other based on a predetermined frequency and a duty cycle of 50%. In addition, Q25 is synchronized with Q28, and Q26 is synchronized with Q27.

Optionally, when the second DC-AC conversion unit works in the full-bridge mode, the second full-bridge circuit in the second AC-DC conversion unit works in the half-bridge mode, and the first partial voltage Vs1 is lower than a second threshold, the controller controls the second full-bridge circuit to work in the half-bridge mode. Specifically, the second threshold is obtained based on a voltage ratio of the second DC-AC conversion unit, a minimum value of a voltage ratio of the second AC-DC conversion unit, a second turn ratio, and a range of the first partial voltage. The second threshold may be c*(Ns2/Np2)*min(d)*min(Vp)=(Ns2/Np2)*min(Vp) (where c=2, min(d)=0.5, and min(Vp) is a minimum value of the first total voltage). It may be understood that the second threshold may be a value corresponding to c*(Ns2/Np2)*min(d)*min(Vp), or may be any value in a value range determined according to c*(Ns2/Np2)*min(d)*min(Vp). In this embodiment of this application, an example in which the value corresponding to c*(Ns2/Np2)*min(d)*min(Vp) is the second threshold is used for description. Details are not described below again. When the first partial voltage is lower than the second threshold, that is, Vs1<(Ns2/Np2)*min(Vp), the controller controls the second full-bridge circuit to work in the full-bridge mode.

Optionally, when the second DC-AC conversion unit works in the full-bridge mode, the second full-bridge circuit in the second AC-DC conversion unit works in the half-bridge mode, and the first total voltage Vp is greater than a third threshold, the controller controls the second full-bridge circuit to work in the full-bridge mode. Specifically, the third threshold is obtained based on a voltage ratio of the second DC-AC conversion unit, a minimum value of a voltage ratio of the second AC-DC conversion unit, a second turn ratio, and a range of the second total voltage. The third threshold may be max(Vs1)/c/(Ns2/Np2)/min(d)=max(Vs1)/(Ns2/Np2) (where c=2, min(d)=0.5, and max(Vs1) is a maximum value of the first partial voltage). It may be understood that the third threshold may be a value corresponding to max(Vs1)/c/(Ns2/Np2)/min(d), or may be any value in a value range determined according to max(Vs1)/c/(Ns2/Np2)/min(d). In this embodiment of this application, an example in which the value corresponding to max(Vs1)/c/(Ns2/Np2)/min(d) is the third threshold is used for description. Details are not described below again. When the first total voltage is greater than the third threshold, that is, Vp>max(Vs1)/(Ns2/Np2), the controller controls the second full-bridge circuit to work in the full-bridge mode.

It may be understood that, for example, when Vs1/Vp is lower than the first threshold Ns2/Np2, the controller controls the second full-bridge circuit to work in the full-bridge mode. In the second power conversion module, when the second DC-AC conversion unit works in the full-bridge mode and the second full-bridge circuit works in the half-bridge mode (where c=2 and d=1), according to Vs3=c*(Ns2/Np2)*d*Vp, the third partial voltage is Vs3=2*Vp*(Ns2/Np2). Therefore, a ratio of the third partial voltage Vs3 to the first total voltage Vp is Vs3/Vp=2*Ns2/Np2, and a control condition that Vs1/Vp is lower than the first threshold Ns2/Np2 may be represented as Vs3>2*Vs1. In other words, when Vs1/Vp is lower than the first threshold Ns2/Np2, the controller controls the second full-bridge circuit to work in the full-bridge mode. This is equivalent to that when Vs3>2*Vs1, the controller controls the second full-bridge circuit to work in the full-bridge mode. It may be understood that, when Vs1/Vp is lower than the first threshold Ns2/Np2, the controller controls the second full-bridge circuit to work in the full-bridge mode (where c=2 and d=0.5). To be specific, when Vs3>2*Vs1, the controller controls the second full-bridge circuit to work in the full-bridge mode, so that the third partial voltage is reduced to Vp*(Ns2/Np2). In other words, when the third partial voltage Vs3 is greater than a voltage threshold (for example, when Vs3>2*Vs1), the controller controls the working mode of the second full-bridge circuit to change a relationship between a peak-to-peak alternating current terminal voltage and a direct current terminal voltage in a conversion unit (for example, the second AC-DC conversion unit) in which the second full-bridge circuit is located, so as to reduce the third partial voltage Vs3, and avoid the third partial voltage Vs3 greatly deviating from the first partial voltage Vs1 (a case in which the controller controls the second full-bridge circuit based on the second threshold and the third threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the second AC-DC conversion unit includes a second full-bridge circuit, and the second full-bridge circuit may work in a full-bridge mode or a half-bridge mode. The working mode of the second DC-AC conversion unit remains unchanged (where the full-bridge circuit may be a full-bridge circuit that constantly works in a full-bridge mode, a half-bridge circuit that constantly works in a half-bridge mode, or another circuit that constantly works in a fixed mode, and for ease of description, the full-bridge circuit that constantly works in a full-bridge mode is used as an example for description herein). The second full-bridge circuit in the second AC-DC conversion unit works in the full-bridge mode, and a ratio of the first partial voltage to the first total voltage is greater than a fourth threshold. The controller controls the second full-bridge circuit to work in the half-bridge mode. The fourth threshold is obtained based on a voltage ratio of the second DC-AC conversion unit, a minimum value of a voltage ratio of the second AC-DC conversion unit, and a second turn ratio of the second transformer unit. Herein, when the second DC-AC conversion unit works in the full-bridge mode, c=2, and the fourth threshold is c*(Ns2/Np2)*min(d)=Ns2/Np2 (min(d)=0.5). It may be understood that the fourth threshold may be a value corresponding to c*(Ns2/Np2)*min(d), or may be any value in a value range determined according to c*(Ns2/Np2)*min(d). In addition, the fourth threshold is greater than or equal to the first threshold. In this embodiment of this application, an example in which the value corresponding to c*(Ns2/Np2)*min(d) is the fourth threshold, that is, the fourth threshold is equal to the first threshold is used for description. Details are not described below again. When the ratio of the first partial voltage to the first total voltage is greater than the fourth threshold, that is, Vs1/Vp>Ns2/Np2, the controller controls the second full-bridge circuit to work in the half-bridge mode.

Optionally, when the second DC-AC conversion unit works in the full-bridge mode, the second full-bridge circuit in the second AC-DC conversion unit works in the full-bridge mode, and the first partial voltage Vs1 is greater than a fifth threshold, the controller controls the second full-bridge circuit to work in the half-bridge mode. Herein, the fifth threshold is c*(Ns2/Np2)*min(d)*min(Vp)=(Ns2/Np2)*min(Vp) (where c=2, min(d)=0.5, and min(Vp) is a minimum value of the first total voltage). It may be understood that the fifth threshold may be a value corresponding to c*(Ns2/Np2)*min(d)*min(Vp), or may be any value in a value range determined according to c*(Ns2/Np2)*min(d)*min(Vp). In addition, the fifth threshold is greater than or equal to the second threshold. In this embodiment of this application, an example in which the value corresponding to c*(Ns2/Np2)*min(d)*min(Vp) is the fifth threshold, that is, the fifth threshold is equal to the second threshold is used for description. Details are not described below again. When the first partial voltage is greater than the fifth threshold, that is, Vs1>(Ns2/Np2)*min(Vp), the controller controls the second full-bridge circuit to work in the half-bridge mode.

Optionally, when the second DC-AC conversion unit works in the full-bridge mode, the second full-bridge circuit in the second AC-DC conversion unit works in the full-bridge mode, and the second total voltage Vp is lower than a sixth threshold, the controller controls the second full-bridge circuit to work in the half-bridge mode. Herein, the sixth threshold is max(Vs1)/c/(Ns2/Np2)/min(d)=max(Vs1)/(Ns2/Np2) (where c=2, min(d)=0.5, and max(Vs1) is a maximum value of the first partial voltage). It may be understood that the sixth threshold may be a value corresponding to max(Vs1)/c/(Ns2/Np2)/min(d), or may be any value in a value range determined according to max(Vs1)/c/(Ns2/Np2)/min(d). In addition, the sixth threshold is lower than or equal to the third threshold. In this embodiment of this application, an example in which the value corresponding to max(Vs1)/c/(Ns2/Np2)/min(d) is the sixth threshold, that is, the sixth threshold is equal to the third threshold is used for description. Details are not described below again. When the first total voltage is lower than the sixth threshold, that is, Vp<max(Vs1)/(Ns2/Np2), the controller controls the second full-bridge circuit to work in the half-bridge mode.

It may be understood that, for example, when Vs1/Vp is greater than the fourth threshold Ns2/Np2, the controller controls the second full-bridge circuit to work in the half-bridge mode. In the second power conversion module, when the second DC-AC conversion unit works in the full-bridge mode and the second full-bridge circuit works in the full-bridge mode (where c=2 and d=0.5), according to Vs3=c*(Ns2/Np2)*d*Vp, the third partial voltage Vs3=Vp*(Ns2/Np2). Therefore, a ratio of the third partial voltage Vs3 to the first total voltage Vp is Ns2/Np2=Vs3/Vp, and a control condition that Vs1/Vp is greater than the fourth threshold Ns2/Np2 may be represented as Vs1>Vs3. In other words, when Vs1/Vp is greater than the fourth threshold Ns2/Np2, the controller controls the second full-bridge circuit to work in the half-bridge mode. This is equivalent to that when Vs1>Vs3, the controller controls the second full-bridge circuit to work in the half-bridge mode. It may be understood that, when Vs1/Vp is greater than the fourth threshold Ns2/Np2, the controller controls the second full-bridge circuit to work in the half-bridge mode (where c=2 and d=1). To be specific, when Vs1>Vs3, the controller controls the second full-bridge circuit to work in the half-bridge mode, so that the third partial voltage is boosted to 2*Vp*(Ns2/Np2). In other words, when the third partial voltage Vs3 is lower than a voltage threshold (for example, when Vs3<Vs1), the controller controls the working mode of the second full-bridge circuit to change a relationship between a peak-to-peak alternating current terminal voltage and a direct current terminal voltage in a conversion unit (for example, the second AC-DC conversion unit) in which the second full-bridge circuit is located, so as to boost the third partial voltage Vs3, and avoid the third partial voltage Vs3 not being greater than the first partial voltage Vs1 (a case in which the controller controls the second full-bridge circuit based on the fifth threshold and the sixth threshold is similar, and details are not described herein again). This ensures that direct current voltage conversion effect of the direct current power converter is improved, the direct current power converter is more applicable, and a wide input/output voltage application range with relatively low circuit complexity is implemented.

In some feasible implementations, in the direct current power converter shown in FIG. 5, the controller controls, based on a first reference voltage, a second partial voltage Vs2 between the first connection terminal and the second connection terminal of the capacitor Cs1, and a third partial voltage Vs3 between the first connection terminal and the second connection terminal of the capacitor Cs2, the switching transistor Qb1 and the switching transistor Qb2 in the direct current regulation unit, so as to control a first partial voltage Vs1 between the first connection terminal and the second connection terminal of the capacitor Cb of the direct current regulation unit, so that a sum of the first partial voltage Vs1 and the second partial voltage Vs2 is the first reference voltage. It may be understood that a direct current voltage (namely, the second total voltage Vs) between the third direct current terminal and the fourth direct current terminal of the direct current power converter is equal to the sum of the second partial voltage Vs2 and the first partial voltage Vs1. In other words, the direct current power converter may control the first full-bridge circuit in the first power conversion module based on different first total voltages Vp and/or second total voltages Vs by using the controller, or control the second full-bridge circuit in the second power conversion module based on different first partial voltages Vs1 and/or first total voltages Vp by using the controller. In this way, a direct current voltage whose voltage value is the first reference voltage is output between the third direct current terminal and the fourth direct current terminal of the direct current power converter, so that a range of a ratio of an input direct current voltage to an output direct current voltage is wider, direct current voltage conversion effect is good, and wide applicability is ensured.

In some feasible implementations, in the direct current power converter shown in FIG. 5, the controller in the direct current power converter controls, based on a second reference voltage and a second partial voltage Vs2, the switching transistor Qb1 and the switching transistor Qb2 in the direct current regulation unit, to control a first partial voltage Vs1 between the first connection terminal and the second connection terminal of the capacitor Cb of the direct current regulation unit, so that the first total voltage Vp between the first direct current terminal and the second direct current terminal of the direct current power converter is equal to the second reference voltage. In other words, the direct current power converter may control the first full-bridge circuit in the first power conversion module based on different first total voltages Vp and/or second total voltages Vs by using the controller, or control the second full-bridge circuit in the second power conversion module based on different first partial voltages Vs1 and/or first total voltages Vp by using the controller. In this way, a direct current voltage whose voltage value is the second reference voltage is output between the first direct current terminal and the second direct current terminal of the direct current power converter, so that a range of a ratio of an input direct current voltage to an output direct current voltage is wider, direct current voltage conversion effect is good, and wide applicability is ensured.

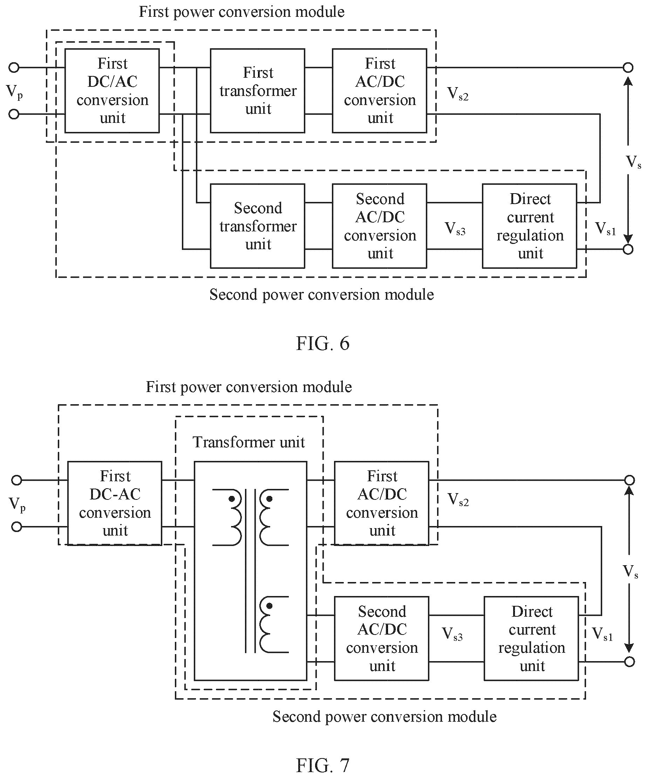

In some feasible implementations, FIG. 6 is a schematic diagram of another structure of a direct current power converter according to this application. As shown in FIG. 6, a first power conversion module of the direct current power converter in FIG. 6 includes a first DC-AC conversion unit, a first AC-DC conversion unit, and a first transformer unit. A first direct current terminal and a second direct current terminal of the first DC-AC conversion unit are respectively the first direct current terminal and the second direct current terminal of the first power conversion module; a first alternating current terminal and a second alternating current terminal of the first DC-AC conversion unit are respectively coupled to a first alternating current terminal and a second alternating current terminal of the first AC-DC conversion unit by using the first transformer unit; and a first direct current terminal and a second direct current terminal of the first AC-DC conversion unit are respectively the third direct current terminal and the fourth direct current terminal of the first power conversion module. The first DC-AC conversion unit and/or the first AC-DC conversion unit include/includes a first full-bridge circuit, and the controller (not shown in FIG. 6) controls, based on a first total voltage between the first direct current terminal and the second direct current terminal of the direct current power converter and/or a second total voltage between the third direct current terminal and the fourth direct current terminal of the direct current power converter, the first full-bridge circuit to work in a full-bridge mode or a half-bridge mode, to change a relationship between an alternating current terminal voltage and a direct current terminal voltage of the first full-bridge circuit in the first power conversion module. In this way, a difference between a direct current voltage (namely, a second partial voltage Vs2) between the first direct current terminal and the second direct current terminal of the first AC-DC conversion unit in the first power conversion module and the second total voltage Vs is not greater than a specific threshold.

Optionally, a second power conversion module of the direct current power converter in FIG. 6 includes the first DC-AC conversion unit, a second AC-DC conversion unit, a second transformer unit, and a direct current regulation unit. The first direct current terminal and the second direct current terminal of the first DC-AC conversion unit are respectively the first direct current terminal and the second direct current terminal of the second power conversion module; the first alternating current terminal and the second alternating current terminal of the first DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. Optionally, the second AC-DC conversion unit may include a second full-bridge circuit. The controller controls, based on the first total voltage Vp and/or a first partial voltage Vs1 between the third direct current terminal and the fourth direct current terminal of the direct current regulation unit, the second full-bridge circuit to work in a full-bridge mode or a half-bridge mode, to change a relationship between an alternating current terminal voltage and a direct current terminal voltage of the second full-bridge circuit in the second power conversion module. In this way, a difference between a third partial voltage Vs3 between the first direct current terminal and the second direct current terminal of the second AC-DC conversion unit in the second power conversion module and the first partial voltage Vs1 is not greater than a specific threshold.

In some feasible implementations, FIG. 7 is a schematic diagram of another structure of a direct current power converter according to this application. As shown in FIG. 7, a first power conversion module of the direct current power converter in FIG. 7 includes a first DC-AC conversion unit, a first AC-DC conversion unit, and a transformer unit. A first direct current terminal and a second direct current terminal of the first DC-AC conversion unit are respectively the first direct current terminal and the second direct current terminal of the first power conversion module, and are respectively the first direct current terminal and the second direct current terminal of the second power conversion module. A primary winding of the transformer unit is coupled to a first alternating current terminal and a second alternating current terminal of the first DC-AC conversion unit, a first secondary winding of the transformer unit is coupled to a first alternating current terminal and a second alternating current terminal of the first AC-DC conversion unit, and a second secondary winding of the transformer unit is coupled to a first alternating current terminal and a second alternating current terminal of the second AC-DC conversion unit. A first direct current terminal and a second direct current terminal of the first AC-DC conversion unit are respectively the third direct current terminal and the fourth direct current terminal of the first power conversion module; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module. The first DC-AC conversion unit and/or the first AC-DC conversion unit include/includes a first full-bridge circuit, and the controller (not shown in FIG. 7) controls, based on a first total voltage Vp between the first direct current terminal and the second direct current terminal of the direct current power converter and/or a second total voltage Vs between the third direct current terminal and the fourth direct current terminal of the direct current power converter, the first full-bridge circuit to work in a full-bridge mode or a half-bridge mode, to change a relationship between an alternating current terminal voltage and a direct current terminal voltage of the first full-bridge circuit in the first power conversion module. In this way, a difference between a direct current voltage (namely, a second partial voltage Vs2) between the first direct current terminal and the second direct current terminal of the first AC-DC conversion unit in the first power conversion module and the second total voltage Vs is not greater than a specific threshold.

Optionally, the second AC-DC conversion unit may include a second full-bridge circuit. The controller controls, based on the first total voltage Vp and/or a first partial voltage Vs1 between the third direct current terminal and the fourth direct current terminal of the direct current regulation unit, the second full-bridge circuit to work in a full-bridge mode or a half-bridge mode, to change a relationship between an alternating current terminal voltage and a direct current terminal voltage of the second full-bridge circuit in the second power conversion module. In this way, a difference between a third partial voltage Vs3 between the first direct current terminal and the second direct current terminal of the second AC-DC conversion unit in the second power conversion module and the first partial voltage Vs1 is not greater than a specific threshold.

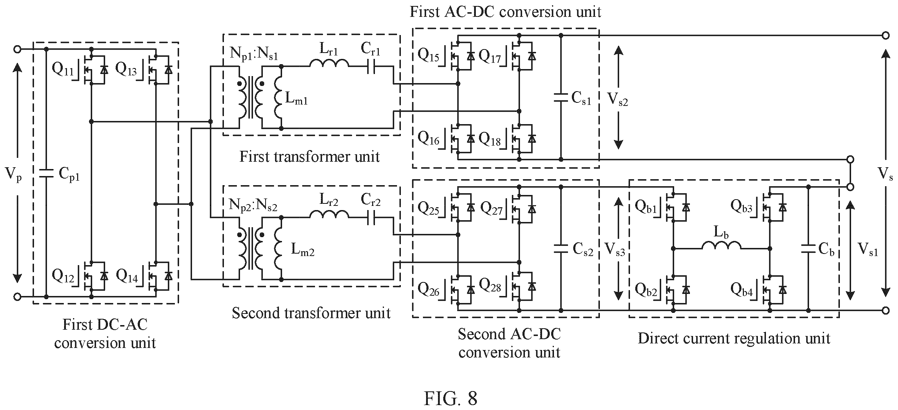

In some feasible implementations, the first DC-AC conversion unit and the first AC-DC conversion unit in the first power conversion module of the direct current power converter in FIG. 6 include a first full-bridge circuit, and the second AC-DC conversion unit in the second power conversion module includes a second full-bridge circuit. FIG. 8 is a schematic diagram of another structure of a direct current power converter according to this application. As shown in FIG. 8, a first full-bridge circuit included in a first DC-AC conversion unit includes switching transistors Q11, Q12, Q13, and Q14 (where each switching transistor may be a metal-oxide-semiconductor field-effect transistor), and a capacitor Cp1. A second connection terminal of Q11 is connected to a first connection terminal of Q12, a second connection terminal of Q13 is connected to a first connection terminal of Q14, a first connection terminal of Q11 is connected to a first connection terminal of Cp1 and a first connection terminal of Q13, and a second connection terminal of Q12 is connected to a second connection terminal of Cp1 and a second connection terminal of Q14. The first connection terminals of Q11, Q12, Q13, and Q14 may be drain electrodes of Q11, Q12, Q13, and Q14, and the second connection terminals of the switching transistors Q11, Q12, Q13, and Q14 may be source electrodes of Q11, Q12, Q13, and Q14. A first full-bridge circuit included in a first AC-DC conversion unit includes switching transistors Q15, Q16, Q17, and Q18, and a capacitor Cs1. A second full-bridge circuit included in a second AC-DC conversion unit includes switching transistors Q25, Q26, Q27, and Q28, and a capacitor Cs2. Each switching transistor in the first full-bridge circuit included in the first AC-DC conversion unit and the second full-bridge circuit included in the second AC-DC conversion unit may be a metal-oxide-semiconductor field-effect transistor, and a connection relationship between a switching transistor and a capacitor of each full-bridge circuit may be the same as that of the first full-bridge circuit included in the first DC-AC conversion unit. Details are not described herein again. A connection terminal of Cp1 and the switching transistors Q11 and Q13 of the first full-bridge circuit in the first DC-AC conversion unit is the first direct current terminal of the direct current power converter, and a connection terminal of Cp1 and the switching transistors Q12 and Q14 of the first full-bridge circuit in the first DC-AC conversion unit is the second direct current terminal of the direct current power converter. Further, the first transformer unit and the second transformer unit in FIG. 8 include a transformer and a resonant circuit. Refer to FIG. 8. The first transformer unit in FIG. 8 includes a first transformer, and a turn ratio of a first winding to a second winding of the first transformer is Np1:Ns1 (or Np1/Ns1). The first transformer unit further includes a first resonant circuit, and the first resonant circuit includes an excitation inductor Lm1, a resonant inductor Lr1, and a resonant capacitor Cr1. The excitation inductor Lm1 is an equivalent inductor of the first winding and the second winding of the first transformer, and a first terminal and a second terminal of the first winding of the first transformer are respectively connected to a connection terminal of the switching transistors Q11 and Q12 and a connection terminal of the switching transistors Q13 and Q14 in the first full-bridge circuit included in the first DC-AC conversion unit, a first terminal of the second winding is connected to, by using the resonant inductor Lr1 and the resonant capacitor Cr1, a connection terminal of the switching transistors Q15 and Q16 in the first full-bridge circuit included in the first AC-DC conversion unit, and a second terminal of the second winding is connected to a connection terminal of the switching transistors Q17 and Q18 in the first full-bridge circuit included in the first AC-DC conversion unit. The second transformer unit includes a second transformer, and a turn ratio of a first winding to a second winding of the second transformer is Np2:Ns2 (or Np2/Ns2). The second transformer unit further includes a second resonant circuit, and the second resonant circuit includes an excitation inductor Lm2, a resonant inductor Lr2, and a resonant capacitor Cr2. The excitation inductor Lm2 is an equivalent inductor of the first winding and the second winding of the second transformer, and a first terminal and a second terminal of the first winding of the second transformer are respectively connected to a connection terminal of the switching transistors Q11 and Q12 and a connection terminal of the switching transistors Q13 and Q14 in the first full-bridge circuit included in the first DC-AC conversion unit, a first terminal of the second winding is connected to, by using the resonant inductor Lr2 and the resonant capacitor Cr2, a connection terminal of the switching transistors Q25 and Q26 in the second full-bridge circuit included in the second AC-DC conversion unit, and a second terminal of the second winding is connected to a connection terminal of the switching transistors Q27 and Q28 in the second full-bridge circuit included in the second AC-DC conversion unit. Further, the direct current regulation unit in FIG. 7 may include a buck-boost circuit. Refer to FIG. 8. The direct current regulation unit in FIG. 8 includes a buck-boost circuit, and the buck-boost circuit includes a switching transistor Qb1, a switching transistor Qb2, a switching transistor Qb3, a switching transistor Qb4 (where each switching transistor may be a metal-oxide-semiconductor field-effect transistor), an inductor Lb, and a capacitor Cb. A second connection terminal of Qb1 is connected to a first connection terminal of Qb2, and a connection terminal of Qb1 and Qb2 is connected to a connection terminal connected to a first connection terminal of Qb4 by using a second connection terminal of the inductor Lb and Qb3, a second connection terminal of Qb2 and a second connection terminal of Qb4 are connected to a second connection terminal of the capacitor Cb, and a first connection terminal of Qb3 is connected to a first connection terminal of the capacitor Cb. A first connection terminal of Qb1 and the second connection terminal of Qb2 in the buck-boost circuit are respectively connected to a first connection terminal of the capacitor Cs2 and a second connection terminal of the capacitor Cs2 in the second AC-DC conversion unit, and a connection terminal of Qb3 and Cb is connected to a second connection terminal of the capacitor Cs1 in the first AC-DC conversion unit. A connection terminal of the capacitor Cs1 and the switching transistors Q15 and Q17 in the first AC-DC conversion unit is the third direct current terminal of the direct current power converter, and a connection terminal of the capacitor Cb and Qb2 and Qb4 is the fourth direct current terminal of the direct current power converter.

In some feasible implementations, in the direct current power converter shown in FIG. 8, the first DC-AC conversion unit and/or the first AC-DC conversion unit include/includes a first full-bridge circuit, and the controller (not shown in FIG. 8) controls, based on a first total voltage Vp between the first direct current terminal and the second direct current terminal of the direct current power converter and/or a second total voltage Vs between the third direct current terminal and the fourth direct current terminal of the direct current power converter, the first full-bridge circuit to work in a full-bridge mode or a half-bridge mode, to change a relationship between an alternating current terminal voltage and a direct current terminal voltage of the first full-bridge circuit. In this way, a difference between a direct current voltage (namely, a second partial voltage Vs2) between the first direct current terminal and the second direct current terminal of the first AC-DC conversion unit in the first power conversion module and the second total voltage Vs is not greater than a specific threshold. Optionally, the second AC-DC conversion unit may include a second full-bridge circuit. The controller controls, based on the first total voltage Vp and/or a first partial voltage Vs1 between the third direct current terminal and the fourth direct current terminal of the direct current regulation unit, the second full-bridge circuit to work in a full-bridge mode or a half-bridge mode, to change a relationship between an alternating current terminal voltage and a direct current terminal voltage of the second full-bridge circuit in the second power conversion module. In this way, a difference between a third partial voltage Vs3 between the first direct current terminal and the second direct current terminal of the second AC-DC conversion unit in the second power conversion module and the first partial voltage Vs1 is not greater than a specific threshold. Herein, for a process in which the controller controls the first full-bridge circuit based on the first total voltage Vp and/or the second total voltage Vs, and the controller controls the second full-bridge circuit based on the first total voltage Vp and/or the first partial voltage Vs1, refer to the foregoing descriptions of the direct current power converter shown in FIG. 5. Details are not described herein again.

In some feasible implementations, in the direct current power converter shown in FIG. 8, the controller controls, based on a first reference voltage, a second partial voltage Vs2 between the first connection terminal and the second connection terminal of the capacitor Cs1, and a third partial voltage Vs3 between the first connection terminal and the second connection terminal of the capacitor Cs2, the switching transistor Qb1, Qb2, Qb3, and Qb4 in the direct current regulation unit, so as to control a first partial voltage Vs1 between the first connection terminal and the second connection terminal of the capacitor Cb of the direct current regulation unit, so that a sum of the first partial voltage Vs1 and the second partial voltage Vs2 is the first reference voltage. It may be understood that a direct current voltage (namely, the second total voltage Vs) between the third direct current terminal and the fourth direct current terminal of the direct current power converter is equal to the sum of the second partial voltage Vs2 and the first partial voltage Vs1. In other words, the direct current power converter may control the first full-bridge circuit in the first power conversion module based on different first total voltages Vp and/or second total voltages Vs by using the controller, or control the second full-bridge circuit in the second power conversion module based on different first partial voltages Vs1 and/or first total voltages Vp by using the controller. In this way, a direct current voltage whose voltage value is the first reference voltage is output between the third direct current terminal and the fourth direct current terminal of the direct current power converter, so that a range of a ratio of an input direct current voltage to an output direct current voltage is wider, direct current voltage conversion effect is good, and wide applicability is ensured.

In some feasible implementations, in the direct current power converter shown in FIG. 8, the controller in the direct current power converter controls, based on a second reference voltage and a second partial voltage Vs2, the switching transistor Qb1, Qb2, Qb3, and Qb4 in the direct current regulation unit, to control a first partial voltage Vs1 between the first connection terminal and the second connection terminal of the capacitor Cb of the direct current regulation unit, so that the first total voltage Vp between the first direct current terminal and the second direct current terminal of the direct current power converter is equal to the second reference voltage. In other words, the direct current power converter may control the first full-bridge circuit in the first power conversion module based on different first total voltages Vp and/or second total voltages Vs by using the controller, or control the second full-bridge circuit in the second power conversion module based on different first partial voltages Vs1 and/or first total voltages Vp by using the controller. In this way, a direct current voltage whose voltage value is the second reference voltage is output between the first direct current terminal and the second direct current terminal of the direct current power converter, so that a range of a ratio of an input direct current voltage to an output direct current voltage is wider, direct current voltage conversion effect is good, and wide applicability is ensured.

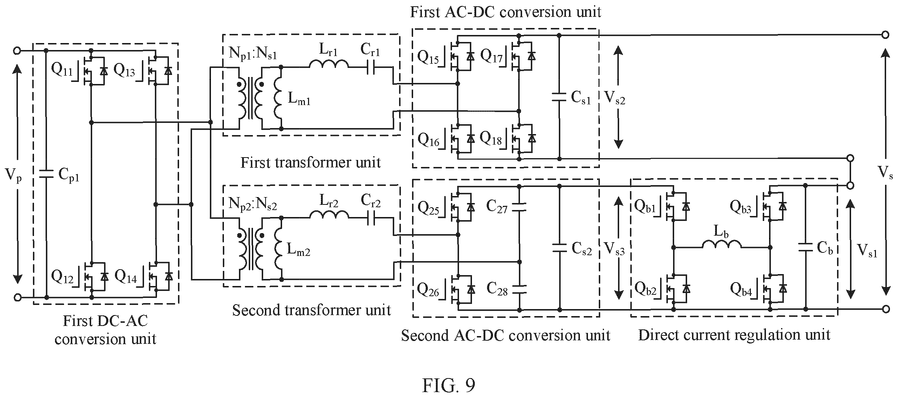

In some feasible implementations, the first DC-AC conversion unit and the first AC-DC conversion unit in the first power conversion module of the direct current power converter in FIG. 6 include a first full-bridge circuit, and the second AC-DC conversion unit in the second power conversion module includes a half-bridge circuit. FIG. 9 is a schematic diagram of another structure of a direct current power converter according to this application. As shown in FIG. 9, a half-bridge circuit included in a second AC-DC conversion unit in a second power conversion module includes switching transistors Q25 and Q26, and capacitors C27, C28, and Cs2. A second connection terminal of Q25 is connected to a first connection terminal of Q26, a second connection terminal of the capacitor C27 is connected to a first connection terminal of C28, a connection terminal of the switching transistors Q25 and Q26 is connected to a first terminal of a second winding of a second transformer, a connection terminal of the capacitors C27 and C28 is connected to a second terminal of the second winding of the second transformer, a first connection terminal of the capacitor C27 is connected to a first connection terminal of the switching transistor Q25 and a first connection terminal of the capacitor Cs2, and a second connection terminal of the capacitor C28 is connected to a second connection terminal of the switching transistor Q26 and a second connection terminal of the capacitor Cs2. The first connection terminals of the switching transistors Q25 and Q26 may be drain electrodes of Q25 and Q26, and the second connection terminals of Q25 and Q26 may be source electrodes of the switching transistors Q25 and Q26. The controller (not shown in FIG. 9) controls, based on a first total voltage Vp between the first direct current terminal and the second direct current terminal of the direct current power converter and/or a second total voltage Vs between the third direct current terminal and the fourth direct current terminal of the direct current power converter, the first full-bridge circuit to work in a full-bridge mode or a half-bridge mode, to change a relationship between an alternating current terminal voltage and a direct current terminal voltage of the first full-bridge circuit. In this way, a difference between a direct current voltage (namely, a second partial voltage Vs2) between the first direct current terminal and the second direct current terminal of the first AC-DC conversion unit in the first power conversion module and the second total voltage Vs is not greater than a specific threshold. Herein, for a process in which the controller controls the first full-bridge circuit based on the first total voltage Vp and/or the second total voltage Vs, refer to the foregoing descriptions of the direct current power converter shown in FIG. 5. Details are not described herein again.

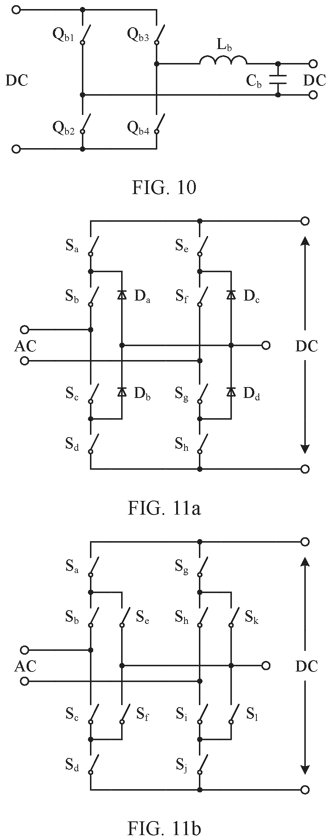

In some feasible implementations, the direct current regulation unit in FIG. 8 or FIG. 9 may include a full-bridge buck circuit. FIG. 10 is a schematic diagram of a structure of a full-bridge buck circuit. As shown in FIG. 10, the full-bridge buck circuit includes a switching transistor Qb1, a switching transistor Qb2, a switching transistor Qb3, a switching transistor Qb4 (where each switching transistor may be a metal-oxide-semiconductor field-effect transistor), an inductor Lb, and a capacitor Cb. A second connection terminal of Qb1 is connected to a first connection terminal of Qb2, and a connection terminal of Qb1 and Qb2 is connected to a second connection terminal of the capacitor Cb. A second connection terminal of Qb3 is connected to a first connection terminal of Qb4, and a connection terminal of Qb3 and Qb4 is connected to a first connection terminal of the capacitor Cb by using the inductor Lb. A first connection terminal of Qb1 is connected to a first connection terminal of Qb3, and a connection terminal of Qb1 and Qb3 is a first direct current terminal (or a first DC end) of the full-bridge buck circuit. A second connection terminal of Qb2 is connected to a second connection terminal of Qb4, and a connection terminal of Qb2 and Qb4 is a second direct current terminal (or a second DC end) of the full-bridge buck circuit. A connection terminal of the first connection terminal of the capacitor Cb and the inductor Lb and a connection terminal of the second connection terminal of the capacitor Cb and Qb1 and Qb2 are respectively a third direct current terminal (or a third DC end) and a fourth direct current terminal (or a fourth DC end) of the full-bridge buck circuit.

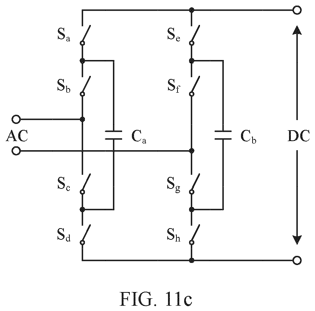

In some feasible implementations, the first full-bridge circuit and the second full-bridge circuit may be a two-level full-bridge circuit or a three-level full-bridge circuit. The three-level full-bridge circuit includes but is not limited to a neutral-point-clamped three-level full-bridge circuit, an active neutral-point-clamped three-level full-bridge circuit, and a flying-capacitor three-level full-bridge circuit. FIG. 11a is a schematic diagram of a structure of a neutral-point-clamped three-level full-bridge circuit. The neutral-point-clamped three-level full-bridge circuit includes switching transistors Sa, Sb, Sc, and Sd of a first bridge arm, switching transistors Se, Sf, Sg, and Sh of a second bridge arm, and diodes Da, Db, Dc, and Dd. A first connection terminal of Sa is connected to a second connection terminal of Sb and a cathode of the diode Da, and a connection terminal of Sa, Sb, and Da is connected to a connection terminal of a first connection terminal of Sc, a second connection terminal of Sd, and an anode of the diode Db by using the diode Da and the diode Db in sequence. A first connection terminal of Se is connected to a second connection terminal of Sf and a cathode of the diode Dc, and a connection terminal of Se, Sf, and Dc is connected to a connection terminal of a first connection terminal of Sg, a second connection terminal of Sh, and an anode of the diode Dd by using the diode Dc and the diode Dd in sequence. A second connection terminal of Sa is connected to a second connection terminal of Se, and a first connection terminal of Sd is connected to a first connection terminal of Sh. A first connection terminal of Sb is connected to a second connection terminal of Sc, and a connection terminal of Sb and Sc is a first alternating current terminal (or a first AC end) of the neutral-point-clamped three-level full-bridge circuit. A first connection terminal of Sf is connected to a second connection terminal of Sg, and a connection terminal of Sf and Sg is a second alternating current terminal (or a second AC end) of the neutral-point-clamped three-level full-bridge circuit. A connection terminal of an anode of Da and a cathode of Db is connected to a connection terminal of an anode of Dc and a cathode of Dd. A connection terminal of Da, Db, Dc, and Dd, a connection terminal of the second connection terminal of Sa and the second connection terminal of Se, and a connection terminal of the first connection terminal of Sd and the first connection terminal of Sh are respectively a first direct current terminal, a second direct current terminal, and a third direct current terminal of the neutral-point-clamped three-level full-bridge circuit. FIG. 11b is a schematic diagram of a structure of an active neutral-point-clamped three-level full-bridge circuit. The active neutral-point-clamped three-level full-bridge circuit includes switching transistors Sa, Sb, Sc, and Sd of a first bridge arm, switching transistors Sg, Sh, Si, and Sj of a second bridge arm, and switching transistors Se, Sf, Sk, and Sl. A first connection terminal of Sa is connected to a second connection terminal of Sb and a second connection terminal of the switching transistor Se, and a connection terminal of Sa, Sb, and Se is connected, by using the switching transistor Se and the switching transistor Sf in sequence, to a connection terminal of a first connection terminal of Sc, a second connection terminal of Sd, and a first connection terminal of the switching transistor Sf. A first connection terminal of Sg is connected to a second connection terminal of Sh and a second connection terminal of the switching transistor Sk, and a connection terminal of Sg, Sh, and Sk is connected, by using the switching transistor Sk and the switching transistor Sl in sequence, to a connection terminal of a first connection terminal of Si, a second connection terminal of Sj, and a first connection terminal of the switching transistor Sl. A second connection terminal of Sa is connected to a second connection terminal of Sg, and a first connection terminal of Sd is connected to a first connection terminal of Sj. A first connection terminal of Sb is connected to a second connection terminal of Sc, and a connection terminal of Sb and Sc is a first alternating current terminal of the neutral-point-clamped three-level full-bridge circuit. A first connection terminal of Sh is connected to a second connection terminal of Si, and a connection terminal of Sh and Si is a second alternating current terminal of the neutral-point-clamped three-level full-bridge circuit. A connection terminal of the first connection terminal of Se and the second connection terminal of Sf is connected to a connection terminal of the first connection terminal of Sk and the second connection terminal of Sl. A connection terminal of Se, Sf, Sk, and Sl, a connection terminal of the second connection terminal of Sa and the second connection terminal of Sg, and a connection terminal of the first connection terminal of Sd and the first connection terminal of Sj are respectively a first direct current terminal, a second direct current terminal, and a third direct current terminal of the active neutral-point-clamped three-level full-bridge circuit. FIG. 11c is a schematic diagram of a structure of a flying-capacitor three-level full-bridge circuit. The flying-capacitor three-level full-bridge circuit includes switching transistors Sa, Sb, Sc, and Sd of a first bridge arm, switching transistors Sg, Sh, Si, and Sj of a second bridge arm, and capacitors Ca and Cb. A first connection terminal of Sa is connected to a second connection terminal of Sb, and a connection terminal of Sa and Sb is connected to a connection terminal of a first connection terminal of Sc and a second connection terminal of Sd by using the capacitor Ca. A first connection terminal of Se is connected to a second connection terminal of Sf, and a connection terminal of Se and Sf is connected to a connection terminal of a first connection terminal of Sg and a second connection terminal of Sh by using the capacitor Cb. A second connection terminal of Sa is connected to a second connection terminal of Se, and a first connection terminal of Sd is connected to a first connection terminal of Sh. A first connection terminal of Sb is connected to a second connection terminal of Sc, and a connection terminal of Sb and Sc is a first alternating current terminal of the neutral-point-clamped three-level full-bridge circuit. A first connection terminal of Sf is connected to a second connection terminal of Sg, and a connection terminal of Sf and Sg is a second alternating current terminal of the neutral-point-clamped three-level full-bridge circuit. A connection terminal of a second connection terminal of Sa and a second connection terminal of Se and a connection terminal of a first connection terminal of Sd and a first connection terminal of Sh are respectively a first direct current terminal and a second direct current terminal of the neutral-point-clamped three-level full-bridge circuit. Each switching transistors in the neutral-point-clamped three-level full-bridge circuit, the active neutral-point-clamped three-level full-bridge circuit, and the flying-capacitor three-level full-bridge circuit may be an insulated gate bipolar transistor (insulated gate bipolar transistor, IGBT) or a metal-oxide-semiconductor field-effect transistor. It may be understood that, if each switching transistor is an insulated gate bipolar transistor, a first connection terminal of each switching transistor may be an emitter, and a second connection terminal of each switching transistor may be a collector. If each switching transistor is a metal-oxide-semiconductor field-effect transistor, a first connection terminal of each switching transistor may be a source electrode, and a second connection terminal of each switching transistor may be a drain electrode. In other words, the first connection terminal and the second connection terminal of each switching transistor may be determined according to a specific device type, and this is not limited herein.

In some feasible implementations, the three-level full-bridge circuit shown in FIG. 11a, FIG. 11b, and FIG. 11c may work in a full-bridge mode or a half-bridge mode. The neutral-point-clamped three-level full-bridge circuit in FIG. 11a is used as an example. When the full-bridge circuit works in the full-bridge mode, the switching transistors Sa and Sc of the first bridge arm are switched on/off and complement with each other based on a predetermined frequency and a duty cycle of 50%; Sb and Sd are switched on/off and complement with each other based on a predetermined frequency and a duty cycle of 50%; the switching transistors Se and Sg of the second bridge arm are also switched on/off and complement with each other based on a predetermined frequency and a duty cycle of 50%; and Sf and Sh are also switched on/off and complement with each other based on a predetermined frequency and a duty cycle of 50%. In this case, a maximum voltage VAC at an alternating current terminal (or an AC end) of the full-bridge circuit is a positive voltage at a direct current terminal (or a DC end), and may be represented as +VDC, and a minimum voltage VAC at the alternating current terminal (or the AC end) of the full-bridge circuit is a negative voltage at the direct current terminal, and may be represented as -VDC. When the full-bridge circuit works in the half-bridge mode, the switching transistors Sa and Sc of the first bridge arm of the full-bridge circuit in FIG. 11a are switched on/off and complement with each other based on a predetermined frequency and a duty cycle of 50%; Sb and Sd are switched on/off and complement with each other based on a predetermined frequency and a duty cycle of 50%; the switching transistors Se and Sf of the second bridge arm remain to be normally disconnected; and the switching transistors Sg and Sh remain to be normally connected. In this case, a maximum voltage VAC at an alternating current terminal of the full-bridge circuit is a positive voltage +VDC at the direct current terminal, and a minimum value is 0. Alternatively, when the full-bridge circuit works in the half-bridge mode, the switching transistors Sa and Sc of the first bridge arm of the full-bridge circuit in FIG. 11a are switched on/off and complement with each other based on a predetermined frequency and a duty cycle of 50%; Sb and Sd are switched on/off and complement with each other based on a predetermined frequency and a duty cycle of 50%; the switching transistors Sg and Sh of the second bridge arm remain constantly disconnected; and the switching transistors Se and Sf remain constantly connected. In this case, a maximum voltage VAC at an alternating current terminal of the full-bridge circuit is 0, and a minimum value is a negative voltage -VDC at the direct current terminal. It may be understood that, when the full-bridge circuit works in the full-bridge mode, a peak-to-peak voltage VAC (namely, 2VDC) at the alternating current terminal is twice a peak-to-peak voltage (namely, VDC) when the full-bridge circuit works in the half-bridge mode. It may be understood that, that the active neutral-point-clamped three-level full-bridge circuit in FIG. 11b and the flying-capacitor three-level full-bridge circuit in FIG. 11c work in the full-bridge mode and the half-bridge mode is the same as that of the neutral-point-clamped three-level full-bridge circuit. Details are not described herein again.

## Claims

1. A direct current power converter, wherein the direct current power converter comprises a controller, a first power conversion module, and a second power conversion module; a first direct current terminal and a second direct current terminal of the first power conversion module are respectively coupled to a first direct current terminal and a second direct current terminal of the second power conversion module; the first direct current terminal and the second direct current terminal of the first power conversion module are respectively a first direct current terminal and a second direct current terminal of the direct current power converter; a third direct current terminal of the first power conversion module is a third direct current terminal of the direct current power converter; a fourth direct current terminal of the first power conversion module is coupled to a third direct current terminal of the second power conversion module; a fourth direct current terminal of the second power conversion module is a fourth direct current terminal of the direct current power converter; and the first power conversion module comprises at least one first full-bridge circuit, wherein coupling is a direct or indirect electrical connection; and
the controller is configured to control, based on a first total voltage between the first direct current terminal and the second direct current terminal of the direct current power converter and/or a second total voltage between the third direct current terminal and the fourth direct current terminal of the direct current power converter, the first full-bridge circuit to work in a full-bridge mode or a half-bridge mode.

2. The direct current power converter according to claim 1, wherein the first power conversion module comprises a first DC-AC conversion unit, a first AC-DC conversion unit, and a first transformer unit; a first direct current terminal and a second direct current terminal of the first DC-AC conversion unit are respectively the first direct current terminal and the second direct current terminal of the first power conversion module; a first alternating current terminal and a second alternating current terminal of the first DC-AC conversion unit are respectively coupled to a first alternating current terminal and a second alternating current terminal of the first AC-DC conversion unit by using the first transformer unit; and a first direct current terminal and a second direct current terminal of the first AC-DC conversion unit are respectively the third direct current terminal and the fourth direct current terminal of the first power conversion module.

3. The direct current power converter according to claim 2, wherein the second power conversion module comprises a second DC-AC conversion unit, a second AC-DC conversion unit, a second transformer unit, and a direct current regulation unit; a first direct current terminal and a second direct current terminal of the second DC-AC conversion unit are respectively the first direct current terminal and the second direct current terminal of the second power conversion module; a first alternating current terminal and a second alternating current terminal of the second DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module.

4. The direct current power converter according to claim 2, wherein the second power conversion module comprises the first DC-AC conversion unit, a second AC-DC conversion unit, a second transformer unit, and a direct current regulation unit; the first direct current terminal and the second direct current terminal of the first DC-AC conversion unit are respectively the first direct current terminal and the second direct current terminal of the second power conversion module; the first alternating current terminal and the second alternating current terminal of the first DC-AC conversion unit are respectively coupled to a first alternating current terminal and a second alternating current terminal of the second AC-DC conversion unit by using the second transformer unit; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module.

5. The direct current power converter according to claim 1, wherein the first power conversion module comprises a first DC-AC conversion unit, a transformer unit, and a first AC-DC conversion unit; and the second power conversion module comprises the first DC-AC conversion unit, the transformer unit, a second AC-DC conversion unit, and a direct current regulation unit, wherein a first direct current terminal and a second direct current terminal of the first DC-AC conversion unit are respectively the first direct current terminal and the second direct current terminal of the first power conversion module, and are respectively the first direct current terminal and the second direct current terminal of the second power conversion module; a primary winding of the transformer unit is coupled to a first alternating current terminal and a second alternating current terminal of the first DC-AC conversion unit, a first secondary winding of the transformer unit is coupled to a first alternating current terminal and a second alternating current terminal of the first AC-DC conversion unit, and a second secondary winding of the transformer unit is coupled to a first alternating current terminal and a second alternating current terminal of the second AC-DC conversion unit; a first direct current terminal and a second direct current terminal of the first AC-DC conversion unit are respectively the third direct current terminal and the fourth direct current terminal of the first power conversion module; a first direct current terminal and a second direct current terminal of the second AC-DC conversion unit are respectively coupled to a first direct current terminal and a second direct current terminal of the direct current regulation unit; and a third direct current terminal and a fourth direct current terminal of the direct current regulation unit are respectively the third direct current terminal and the fourth direct current terminal of the second power conversion module.

6. The direct current power converter according to claim 2 or claim 5, wherein the first DC-AC conversion unit and/or the first AC-DC conversion unit comprise/comprises the first full-bridge circuit, and the controller is configured to control, based on the first total voltage and/or the second total voltage, the first full-bridge circuit to work in the full-bridge mode or the half-bridge mode.

7. The direct current power converter according to claim 6, wherein the first DC-AC conversion unit comprises the first full-bridge circuit; and
the controller is further configured to: when the first full-bridge circuit works in the full-bridge mode and a ratio of the second total voltage to the first total voltage is lower than a first threshold, or the second total voltage is lower than a second threshold, or the first total voltage is greater than a third threshold, control the first full-bridge circuit to work in the half-bridge mode; or
the controller is further configured to: when the first full-bridge circuit works in the half-bridge mode and a ratio of the second total voltage to the first total voltage is greater than a fourth threshold, or the second total voltage is greater than a fifth threshold, or the first total voltage is lower than a sixth threshold, control the first full-bridge circuit to work in the full-bridge mode, wherein
the fourth threshold is greater than or equal to the first threshold, the fifth threshold is greater than or equal to the second threshold, and the sixth threshold is lower than or equal to the third threshold.

8. The direct current power converter according to claim 7, wherein the first threshold and the fourth threshold are obtained based on a maximum value of a voltage ratio of the first DC-AC conversion unit, a voltage ratio of the first AC-DC conversion unit, and a first turn ratio of the first transformer unit;
the second threshold and the fifth threshold are obtained based on the maximum value of the voltage ratio of the first DC-AC conversion unit, the voltage ratio of the first AC-DC conversion unit, the first turn ratio, and a voltage range of the first total voltage; and
the third threshold and the sixth threshold are obtained based on the maximum value of the voltage ratio of the first DC-AC conversion unit, the voltage ratio of the first AC-DC conversion unit, the first turn ratio, and a voltage range of the second total voltage, wherein
the voltage ratio of the first DC-AC conversion unit is a ratio of a peak-to-peak alternating current terminal voltage to a direct current terminal voltage, and the voltage ratio of the first AC-DC conversion unit is a ratio of the direct current terminal voltage to the peak-to-peak alternating current terminal voltage.

9. The direct current power converter according to claim 6, wherein the first AC-DC conversion unit comprises the first full-bridge circuit; and
the controller is further configured to: when the first full-bridge circuit works in the half-bridge mode and a ratio of the second total voltage to the first total voltage is lower than a first threshold, or the second total voltage is lower than a second threshold, or the first total voltage is greater than a third threshold, control the first full-bridge circuit to work in the full-bridge mode; or
the controller is further configured to: when the first full-bridge circuit works in the full-bridge mode and a ratio of the second total voltage to the first total voltage is greater than a fourth threshold, or the second total voltage is greater than a fifth threshold, or the first total voltage is lower than a sixth threshold, control the first full-bridge circuit to work in the half-bridge mode, wherein
the fourth threshold is greater than or equal to the first threshold, the fifth threshold is greater than or equal to the second threshold, and the sixth threshold is lower than or equal to the third threshold.

10. The direct current power converter according to claim 9, wherein the first threshold and the fourth threshold are obtained based on a voltage ratio of the first DC-AC conversion unit, a maximum value of a voltage ratio of the first AC-DC conversion unit, and a first turn ratio of the first transformer unit;
the second threshold and the fifth threshold are obtained based on the voltage ratio of the first DC-AC conversion unit, the maximum value of the voltage ratio of the first AC-DC conversion unit, the first turn ratio, and a range of the first total voltage; and
the third threshold and the sixth threshold are obtained based on the voltage ratio of the first DC-AC conversion unit, the maximum value of the voltage ratio of the first AC-DC conversion unit, the first turn ratio, and a range of the second total voltage, wherein
the voltage ratio of the first DC-AC conversion unit is a ratio of a peak-to-peak alternating current terminal voltage to a direct current terminal voltage, and the voltage ratio of the first AC-DC conversion unit is a ratio of the direct current terminal voltage to the peak-to-peak alternating current terminal voltage.

11. The direct current power converter according to claim 3, wherein the second DC-AC conversion unit and/or the second AC-DC conversion unit comprise/comprises a second full-bridge circuit, and the controller is configured to control, based on a first partial voltage between the third direct current terminal and the fourth direct current terminal of the direct current regulation unit and/or the first total voltage, the second full-bridge circuit to work in the full-bridge mode or the half-bridge mode.

12. The direct current power converter according to claim 11, wherein the second DC-AC conversion unit comprises the second full-bridge circuit; and
the controller is further configured to: when the second full-bridge circuit works in the full-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the half-bridge mode; or
the controller is further configured to: when the second full-bridge circuit works in the half-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the full-bridge mode, wherein
the fourth threshold is greater than or equal to the first threshold, the fifth threshold is greater than or equal to the second threshold, and the sixth threshold is lower than or equal to the third threshold.

13. The direct current power converter according to claim 12, wherein the first threshold and the fourth threshold are obtained based on a minimum value of a voltage ratio of the second DC-AC conversion unit, a voltage ratio of the second AC-DC conversion unit, and a second turn ratio of the second transformer unit;
the second threshold and the fifth threshold are obtained based on the minimum value of the voltage ratio of the second DC-AC conversion unit, the voltage ratio of the second AC-DC conversion unit, the second turn ratio, and a range of the first total voltage; and
the third threshold and the sixth threshold are obtained based on the minimum value of the voltage ratio of the second DC-AC conversion unit, the voltage ratio of the second AC-DC conversion unit, the second turn ratio, and a range of the first partial voltage, wherein
the voltage ratio of the second DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage.

14. The direct current power converter according to claim 11, wherein the second AC-DC conversion unit comprises the second full-bridge circuit; and
the controller is further configured to: when the second full-bridge circuit works in the half-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the full-bridge mode; or
the controller is further configured to: when the second full-bridge circuit works in the full-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the half-bridge mode, wherein
the fourth threshold is greater than or equal to the first threshold, the fifth threshold is greater than or equal to the second threshold, and the sixth threshold is lower than or equal to the third threshold.

15. The direct current power converter according to claim 14, wherein the first threshold and the fourth threshold are obtained based on a voltage ratio of the second DC-AC conversion unit, a minimum value of a voltage ratio of the second AC-DC conversion unit, and a second turn ratio of the second transformer unit;
the second threshold and the fifth threshold are obtained based on the voltage ratio of the second DC-AC conversion unit, the minimum value of the voltage ratio of the second AC-DC conversion unit, the second turn ratio, and a range of the first total voltage; and
the third threshold and the sixth threshold are obtained based on the voltage ratio of the second DC-AC, the minimum value of the voltage ratio of the second AC-DC conversion unit, the second turn ratio, and a range of the first partial voltage, wherein
the voltage ratio of the second DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage.

16. The direct current power converter according to claim 4 or claim 5, wherein the second AC-DC conversion unit comprises a second full-bridge circuit; and
the controller is further configured to: when the second full-bridge circuit works in the half-bridge mode, and a ratio of the first partial voltage between the third direct current terminal and the fourth direct current terminal of the direct current regulation unit to the first total voltage is lower than a first threshold, or the first partial voltage is lower than a second threshold, or the first total voltage is greater than a third threshold, control the second full-bridge circuit to work in the full-bridge mode; or
the controller is further configured to: when the second full-bridge circuit works in the full-bridge mode and a ratio of the first partial voltage to the first total voltage is greater than a fourth threshold, or the first partial voltage is greater than a fifth threshold, or the first total voltage is lower than a sixth threshold, control the second full-bridge circuit to work in the half-bridge mode, wherein
the fourth threshold is greater than or equal to the first threshold, the fifth threshold is greater than or equal to the second threshold, and the sixth threshold is lower than or equal to the third threshold.

17. The direct current power converter according to claim 16, wherein the first threshold and the fourth threshold are obtained based on a voltage ratio of the first DC-AC conversion unit, a minimum value of a voltage ratio of the second AC-DC conversion unit, and a turn ratio of the second transformer unit or a second turn ratio of the transformer unit;
the second threshold and the fifth threshold are obtained based on the voltage ratio of the first DC-AC conversion unit, the minimum value of the voltage ratio of the second AC-DC conversion unit, the turn ratio of the second transformer unit or the second turn ratio, and a range of the first total voltage; and
the third threshold and the sixth threshold are obtained based on the voltage ratio of the first DC-AC conversion unit, the minimum value of the voltage ratio of the second AC-DC conversion unit, the turn ratio of the second transformer unit or the second turn ratio, and a range of the first partial voltage, wherein
the voltage ratio of the first DC-AC conversion unit is a ratio of a peak-to-peak alternating current terminal voltage to a direct current terminal voltage, and the voltage ratio of the second AC-DC conversion unit is a ratio of the direct current terminal voltage to the peak-to-peak alternating current terminal voltage.

18. The direct current power converter according to any one of claim 3, claim 4, and claim 5, wherein the controller is further configured to control, based on a first reference voltage, a second partial voltage between the third direct current terminal and the fourth direct current terminal of the first power conversion module, and a third partial voltage between the first direct current terminal and the second direct current terminal of the second AC-DC conversion unit, the direct current regulation unit to adjust a first partial voltage between the third direct current terminal and the fourth direct current terminal of the direct current regulation unit, so that a sum of the first partial voltage and the second partial voltage is the first reference voltage.

19. The direct current power converter according to claim 18, wherein the controller is further configured to control, based on a second reference voltage and the second partial voltage, the direct current regulation unit to adjust the first partial voltage between the third direct current terminal and the fourth direct current terminal of the direct current regulation unit, so that the first total voltage is equal to the second reference voltage.

20. The direct current power converter according to claim 3, wherein the first DC-AC conversion unit comprises two switching bridge arms connected in parallel, and connection terminals of switching transistors of the switching bridge arms are separately used as the first alternating current terminal and the second alternating current terminal of the first DC-AC conversion unit to connect to the first transformer unit;
the second DC-AC conversion unit comprises two switching bridge arms connected in parallel, and connection terminals of switching transistors of the switching bridge arms are separately used as the first alternating current terminal and the second alternating current terminal of the second DC-AC conversion unit to connect to the second transformer unit;
the first AC-DC conversion unit comprises two switching bridge arms connected in parallel, and connection terminals of switching transistors of the switching bridge arms are separately used as the first alternating current terminal and the second alternating current terminal of the first AC-DC conversion unit to connect to the first transformer unit; and
the second AC-DC conversion unit comprises two switching bridge arms connected in parallel, and connection terminals of switching transistors of the switching bridge arms are separately used as the first alternating current terminal and the second alternating current terminal of the second AC-DC conversion unit to connect to the second transformer unit.

21. The direct current power converter according to claim 4, wherein the first DC-AC conversion unit comprises two switching bridge arms connected in parallel, and connection terminals of switching transistors of the switching bridge arms are respectively used as the first alternating current terminal and the second alternating current terminal of the first DC-AC conversion unit to connect to the first transformer unit and the second transformer unit;
the first AC-DC conversion unit comprises two switching bridge arms connected in parallel, and connection terminals of switching transistors of the switching bridge arms are separately used as the first alternating current terminal and the second alternating current terminal of the first AC-DC conversion unit to connect to the first transformer unit; and
the second AC-DC conversion unit comprises a switching bridge arm and a capacitor bridge arm that are connected in parallel, and a connection terminal of a switching transistor of the switching bridge arm and a connection terminal of a capacitor of the capacitor bridge arm are respectively used as the first alternating current terminal and the second alternating current terminal of the second AC-DC conversion unit to connect to the second transformer unit.

22. A direct current power conversion system, wherein the direct current power conversion system comprises a direct current power supply and the direct current power converter according to any one of claims 1 to 21, wherein
the direct current power supply is configured to provide a direct current voltage input for the direct current power converter;
the direct current power converter is configured to perform direct current power conversion based on a first direct current voltage provided by the direct current power supply, and output a second direct current voltage to a load; and
the direct current power supply comprises at least one of a solar panel or an energy storage battery.
